(19) Europäisches Patentamt
European Patent Office
Office européen des brevets

(11) **EP 4 672 801 A1**

(12) **EUROPEAN PATENT APPLICATION**
published in accordance with Art. 153(4) EPC

(43) Date of publication:
**31.12.2025 Bulletin 2026/01**

(21) Application number: **23942898.0**

(22) Date of filing: **29.06.2023**

(51) International Patent Classification (IPC):
*H04W 24/02* *(2009.01)*

(52) Cooperative Patent Classification (CPC):
**H04W 24/02**

(86) International application number:
**PCT/CN2023/104183**

(87) International publication number:
**WO 2025/000389 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Guangdong OPPO Mobile
Telecommunications
Corp., Ltd.
Wusha, Chang'an, Dongguan 523860 (CN)**

(72) Inventor: **ZHAO, Nande
Dongguan, Guangdong 523860 (CN)**

(74) Representative: **Grassi, Stefano
Bugnion S.p.A.
Viale Lancetti, 17
20158 Milano (IT)**

(54) **WIRELESS COMMUNICATION METHOD AND APPARATUS, AND COMMUNICATION DEVICE**

(57)    The present application provides a wireless communication method and apparatus, and a communication device. The method comprises: a network device sends first information to a terminal device, wherein the first information is used for indicating whether the network device supports the terminal device to receive or send a first transmission on the basis of a first transmission mode before being configured with an exclusive parameter, and the first transmission mode is used for coverage enhancement.

A network device transmits first information to a terminal device, where the first information is used to indicate whether the network device supports to receive or transmit a first transmission based on a first transmission manner before the terminal device is configured with a dedicated parameter, and the first transmission manner is used for coverage enhancement — S601

**FIG. 6**

**Description**

TECHNICAL FIELD

The present disclosure relates to the technical field of mobile communications, and in particular to a method and apparatus for wireless communication, and a communication device.

BACKGROUND

In communication scenarios with limited coverage performance, such as a non-terrestrial network (NTN) system, uplink and downlink transmissions that do not support a coverage enhancement technology may be unable to meet a coverage requirement. Particularly, before a terminal is configured with a dedicated parameter, if the uplink and downlink transmissions cannot be successfully performed, it may cause that the terminal is unable to access a network, which has a significant impact on system performance.

SUMMARY

Embodiments of the present disclosure provide a method and apparatus for wireless communication, and a communication device.

According to an embodiment of the present disclosure, a method for wireless communication is provided, and the method includes the following operation.

A network device transmits first information to a terminal device. The first information is used to indicate whether the network device supports to receive or transmit a first transmission based on a first transmission manner before the terminal device is configured with a dedicated parameter, and the first transmission manner is used for coverage enhancement.

According to an embodiment of the present disclosure, a method for wireless communication is provided, and the method includes the following operation.

A terminal device receives first information from a network device. The first information is used to indicate whether the network device supports to receive or transmit a first transmission based on a first transmission manner before the terminal device is configured with a dedicated parameter, and the first transmission manner is used for coverage enhancement.

According to an embodiment of the present disclosure, an apparatus for wireless communication is provided. The apparatus is applied to a network device, and includes a transmission unit.

The transmission unit is configured to transmit, through the network device, first information to a terminal device. The first information is used to indicate whether the network device supports to receive or transmit a first transmission based on a first transmission manner before the terminal device is configured with a dedicated parameter, and the first transmission manner is used for coverage enhancement.

According to an embodiment of the present disclosure, an apparatus for wireless communication is provided. The apparatus is applied to a terminal device, and includes a receiving unit.

The receiving unit is configured to receive, through the terminal device, first information from a network device. The first information is used to indicate whether the network device supports to receive or transmit a first transmission based on a first transmission manner before the terminal device is configured with a dedicated parameter, and the first transmission manner is used for coverage enhancement.

According to an embodiment of the present disclosure, a communication device is provided. The communication device may be the terminal device or the network device in the aforementioned technical solutions. The communication device includes a processor and a memory. The memory is configured to store a computer program, and the processor is configured to call and run the computer program stored in the memory to perform each of the methods for wireless communication described above.

According to an embodiment of the present disclosure, a chip is provided, and the chip is configured to implement each of the methods for wireless communication described above.

Specifically, the chip includes a processor. The processor is configured to call and run a computer program from a memory, to enable a device installed with the chip to perform each of the method for wireless communication described above.

According to an embodiment of the present disclosure, a computer-readable storage medium is provided. The computer-readable storage medium is configured to store a computer program that enables a computer to perform each of the methods for wireless communication described above.

According to an embodiment of the present disclosure, a computer program product is provided. The computer program product includes a computer program instruction that enables a computer to perform each of the methods for wireless communication described above.

According to an embodiment of the present disclosure, a computer program is provided. The computer program, when being executed on a computer, enables the computer to perform each of the method for wireless communication described above.

In the embodiments of the present disclosure, the network device transmits the first information to the terminal device. In a case where the first information indicates that the network device supports to receive or transmit the first transmission based on the first transmission manner for coverage enhancement before the terminal device is configured with the dedicated parameter, the uplink and downlink coverage performances of the terminal device before the terminal device is configured with the dedicated parameter can be improved, thereby avoiding the situation where the terminal device is unable to the network.

BRIEF DESCRIPTION OF THE DRAWINGS

The accompanying drawings illustrated herein are provided to facilitate a further understanding of the present disclosure, and constitute a part of the present disclosure. The illustrative embodiments of the present disclosure and their descriptions are used to explain the present disclosure, and do not constitute any undue limitation of the present disclosure. In the drawings:

FIG. 1 is a schematic diagram of an application scenario of an embodiment of the present disclosure.
FIG. 2 is a schematic diagram of an architecture of another communication system according to an embodiment of the present disclosure.
FIG. 3 is a schematic diagram of an architecture of another communication system according to an embodiment of the present disclosure.
FIG. 4 is a schematic diagram of an NTN scenario based on a transparent payload satellite according to an embodiment of the present disclosure.
FIG. 5 is a schematic diagram of an NTN scenario based on regenerative payload satellites according to an embodiment of the present disclosure.
FIG. 6 illustrates a first method for wireless communication according to an embodiment of the present disclosure.
FIG. 7 illustrates a second method for wireless communication according to an embodiment of the present disclosure.
FIG. 8 illustrates a third method for wireless communication according to an embodiment of the present disclosure.
FIG. 9 illustrates a fourth method for wireless communication according to an embodiment of the present disclosure.
FIG. 10 illustrates a fifth method for wireless communication according to an embodiment of the present disclosure.
FIG. 11 illustrates a sixth method for wireless communication according to an embodiment of the present disclosure.
FIG. 12 illustrates a seventh method for wireless communication according to an embodiment of the present disclosure.
FIG. 13 illustrates a PRACH preamble associated with transmission of PDSCH repetition provided in first information according to an embodiment of the present disclosure.
FIG. 14 illustrates an eighth method for wireless communication according to an embodiment of the present disclosure.
FIG. 15 illustrates a ninth method for wireless communication according to an embodiment of the present disclosure.
FIG. 16 illustrates a PRACH preamble associated with TBS scaling for PDSCH provided in first information according to an embodiment of the present disclosure.
FIG. 17 is a schematic diagram of an optional structure of an apparatus for wireless communication according to an embodiment of the present disclosure.
FIG. 18 is a schematic diagram of an optional structure of an apparatus for wireless communication according to an embodiment of the present disclosure.
FIG. 19 is a schematic structural diagram of a communication device according to an embodiment of the present disclosure.
FIG. 20 is a schematic structural diagram of a chip according to an embodiment of the present disclosure.
FIG. 21 is a schematic block diagram of a communication system according to an embodiment of the present disclosure.

DETAILED DESCRIPTION

The technical solutions in the embodiments of the present disclosure are described in the following with reference to the accompanying drawings in the embodiments of the present disclosure. It is apparent that the described embodiments are part of the embodiments of the present disclosure, but not all of the embodiments. Based on the embodiments of the present disclosure, all other embodiments acquired by those skilled in the art without creative efforts shall fall within the scope of protection of the present disclosure.

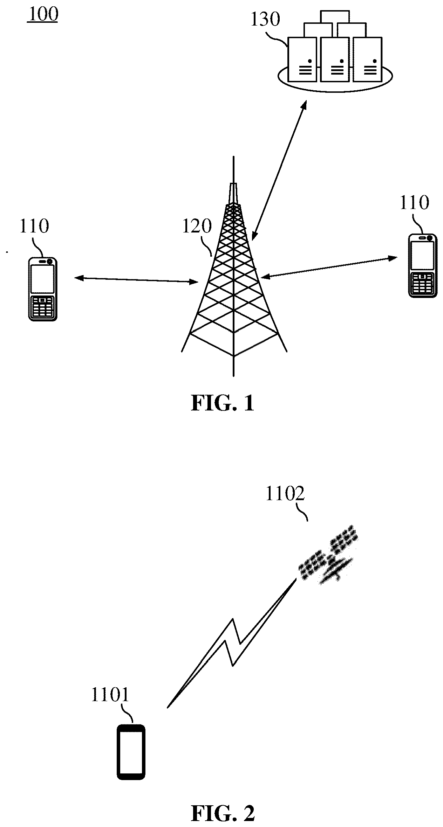

FIG. 1 is a schematic diagram of an application scenario of an embodiment of the present disclosure.

As shown in FIG. 1, a communication system 100 may include terminal devices 110 and a network device 120. The network device 120 may communicate with the terminal devices 110 over an air interface. Multi-service transmission is supported between the terminal devices 110 and the network device 120.

It should be understood that, in the embodiments of the present disclosure, the communication system 100 is only used as an example for illustrative purpose, but the embodiments of the present disclosure are not limited thereto. That is, the technical solutions in the embodiments of the present disclosure may be applied to various communication systems, such as: a long term evolution (LTE) system, an LTE time division duplex (TDD), a universal mobile telecommunication system (UMTS), an Internet of things (IoT) system, a narrow band IoT (NB-IoT) system, an enhanced machine-type communication (eMTC) system, a 5th generation (5G) communication system (also referred to as a new radio (NR) communication system), or a future communication system, etc.

In the communication system 100 shown in FIG. 1, the network device 120 may be an access network device that communicates with the terminal devices 110. The access network device may provide communication coverage for a specific geographic area and may communicate with the terminal devices 110 (e.g., user equipment (UE)) located within the coverage.

The network device 120 may be an evolutional node B (eNB or eNodeB) in an LTE system, a next generation radio access network (NG RAN) device, or a base station (gNB) in an NR system, or a wireless controller in a cloud radio access network (CRAN). Alternatively, the network device 120 may be a relay station, an access point, a vehicle-mounted device, a wearable device, a hub, a switch, a bridge, a router, or a network device in a future evolutional public land mobile network (PLMN), etc.

The terminal devices 110 may be any terminal device, which includes but not limited to the terminal device(s) that are connected to the network device 120 or other terminal device(s) via wired or wireless connections.

For example, each of the terminal devices 110 may refer to an access terminal, a UE, a user unit, a user station, a mobile station, a mobile site, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with wireless communication capabilities, a computing device or another processing device connected to a wireless modem, a vehicle-mounted device, a wearable device, a terminal device in a 5G network, or a terminal device in future evolutional networks, etc.

The terminal devices 110 may be used for device to device (D2D) communication.

The wireless communication system 100 may further include a core network device 130 that communicates with the base station. The core network device 130 may be a 5G Core (5GC) device, such as an access and mobility management function (AMF), an authentication server function (AUSF), a user plane function (UPF), or a session management function (SMF). Optionally, the core network device 130 may also be an evolved packet core (EPC) device in the LTE network, such as a session management function + core packet gateway (SMF+PGW-C) device. It should be understood that the SMF+PGW-C may simultaneously implement functions of both the SMF and the PGW-C. During network evolution process, the aforementioned core network device may also be referred to by other names, or new network entities may be formed by dividing functions of the core network, and no limits are made thereto in the embodiments of the present disclosure.

Various functional units in the communication system 100 may further establish connections through next generation (NG) interface(s) for realizing communication.

For example, the terminal device may establish an air interface connection with the access network device through a Uu interface for transmitting user plane data and control plane signaling. The terminal device may establish a control plane signaling connection with the AMF through an NG interface 1 (referred to as N1). The access network device, such as a next generation wireless access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). Additionally, the SMF may establish a control plane signaling connection with a policy control function (PCF) through an NG interface 7 (referred to as N7).

One base station, one core network device and two terminal devices are exemplarily illustrated in FIG. 1. Optionally, the wireless communication system 100 may include multiple base stations, and another number of terminal devices may be included in the coverage of each base station. No limits are made thereto in the embodiments of the present disclosure.

3GPP is currently researching non-terrestrial network (NTN) technology, which typically utilizes satellite communication to provide communication services to terrestrial users. Compared with terrestrial cellular network communication, the satellite communication has many unique advantages. Firstly, the satellite communication is not limited by geographical location of the user. For example, general land communications cannot cover oceans, mountains, deserts, and other areas where the communication device(s) cannot be set up or where the communication coverage(s) are not available due to sparse population. However, for the satellite communication, since a single satellite can cover vast terrestrial areas and the satellite can make orbit motion around the Earth, theoretically every corner of the Earth can be covered by the satellite communication. Secondly, the satellite communication has significant social value. The satellite communication may enable a cost-effective coverage in remote mountainous areas, poor and underdeveloped countries or regions, which allows people in such areas to access advanced voice communication and mobile Internet technology. This is conductive to narrowing the digital divide with developed regions and promoting the development in such areas. Thirdly, the satellite communication can offer long-distance coverage without a significant increase in communication cost as communication distance increases. Finally, the satellite communication has high stability and is not limited by natural disasters.

The NTN technology may be combined with various communication systems. For example, the NTN technology may be combined with an NR system to form an NR-NTN system. For another example, the NTN technology may be combined with an IoT system to form an IoT-NTN system. As an example, the IoT-NTN system may include an NB-IoT-NTN system and an eMTC-NTN system.

FIG. 2 is a schematic diagram of an architecture of another communication system according to an embodiment of the present disclosure.

As shown in FIG. 2, a communication system includes a terminal device 1101 and a satellite 1102. Wireless communication may be performed between the terminal device 1101 and the satellite 1102. The network formed between the terminal device 1101 and the satellite 1102 may also be referred to as an NTN. In the communication system architecture shown in FIG. 2, the satellite 1102 may have the function(s) of a base station, and the terminal device 1101 may directly communicate with the satellite 1102. Under the system architecture, the satellite 1102 may be referred to as a network device. In some embodiments of the present disclosure, the communication system may include multiple network devices 1102, and another number of terminal devices may be included within the coverage of each network device 1102. No limits are made thereto in the embodiments of the present disclosure.

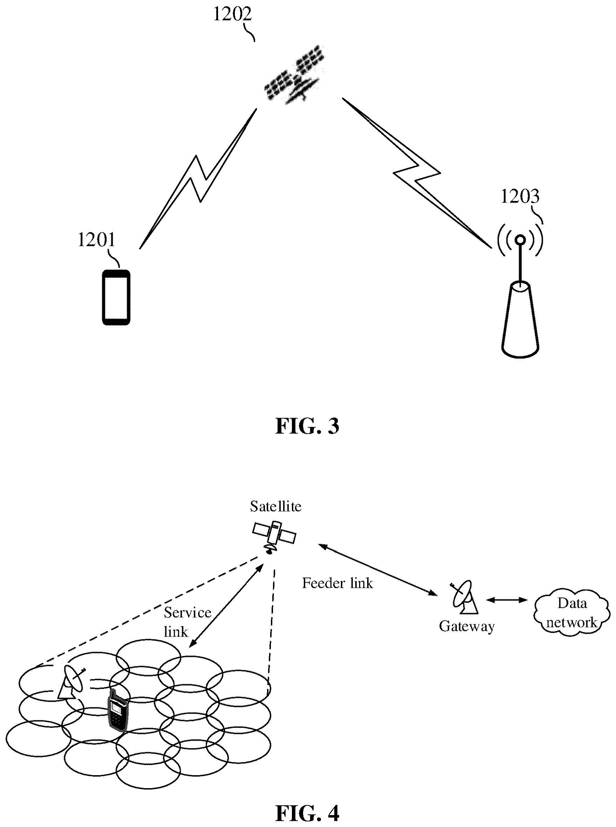

FIG. 3 is a schematic diagram of an architecture of another communication system according to an embodiment of the present disclosure.

As shown in FIG. 3, a communication system includes a terminal device 1201, a satellite 1202, and a base station 1203. Wireless communication may be performed between the terminal device 1201 and the satellite 1202, and communication may be performed between the satellite 1202 and the base station 1203. The network formed among the terminal device 1201, the satellite 1202 and the base station 1203 may also be referred to as an NTN. In the communication system architecture shown in FIG. 3, the satellite 1202 may not have the function(s) of the base station, and communication between the terminal device 1201 and the base station 1203 needs to be relayed through the satellite 1202. Under the system architecture, the base station 1203 may be referred to as a network device. In some embodiments of the present disclosure, the communication system may include multiple network devices 1203, and another number of terminal devices may be included within the coverage of each network device 1203. No limits are made thereto in the embodiments of the present disclosure. The network device 1203 may be the network device 120 in FIG. 1.

It should be understood that the aforementioned satellite 1102 or satellite 1202 includes, but is not limited to: a low-Earth orbit (LEO) satellite, a medium-Earth orbit (MEO) satellite, a geostationary Earth orbit (GEO) satellite, a high elliptical orbit (HEO) satellite, etc.

Multiple beams may be used for the satellite to cover the ground. For example, one satellite may form dozens or even hundreds of beams to cover the ground. In other words, each satellite beam may cover a ground area with a diameter ranging from tens to hundreds of kilometers, thereby ensuring satellite coverage and enhancing the system capacity of the entire satellite communication system.

As an example, an altitude range of the LEO satellite may be from 500 kilometers to 1500 kilometers, and a corresponding orbital period may be about 1.5 hours to 2 hours. A signal propagation delay for single-hop communication between users may generally be less than 20 milliseconds, and the maximum satellite visibility duration may be 20 minutes. The LEO satellite has a short signal propagation distance and low link loss, and does not have a high requirement on the transmission power of user terminal(s). An orbit altitude of the GEO satellite may reach 35786 km, and a rotation period around the Earth may be 24 hours. A signal propagation delay for the single-hop communication between users may generally be 250 milliseconds.

In order to ensure the satellite coverage and enhance the system capacity of the entire satellite communication system, the satellite uses multiple beams to cover the ground. A satellite may form dozens or even hundreds of beams to cover the ground. Each satellite beam may cover a ground area with a diameter ranging from tens to hundreds of kilometers.

It should be noted that FIGS. 1 to 3 are merely illustrative examples of the system in which the present disclosure is applied. Of course, the methods shown in the embodiments of the present disclosure may further be applied to other systems. In addition, terms "system" and "network" are often used interchangeably in the present disclosure. A term "and/or" in the present disclosure is only an association relationship describing associated objects, and indicates that there may be three relationships. For example, A and/or B may indicate three cases: existence of A alone, existence of A and B simultaneously, and existence of B alone. Furthermore, a character "/" in the present disclosure generally indicates that preceding and following associated objects are in an "or" relationship. It should also be understood that "indicate" mentioned in the embodiments of the present disclosure may be a direct indication or an indirect indication, or may mean that there is an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond" mentioned in the embodiments of the present disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that "predefined" or "predefined rule(s)" mentioned in the embodiments of the present disclosure may be implemented by prestoring corresponding code(s), table(s), or other ways that may be used to indicate related information in devices (e.g., including the terminal device and the network device), and the specific implementation(s) are not limited in the present disclosure. For example, the "predefined" may refer to those defined in a protocol. It should also be understood that, in the embodiments of the present disclosure, the term "protocol" may refer to a standard protocol in the field of communications, such as a LTE protocol, a NR protocol, and a related protocol applied in a future communication system, which is not limited in the present disclosure.

Satellites may be classified into two types in terms of the functions they provide: transparent payload and regenerative payload. For a transparent payload satellite, only functions of wireless frequency filtering, frequency conversion and amplification are provided; and only transparent forwarding for the signal is provided without changing the waveform signal that is forwarded. For a regenerative payload satellite, in addition to providing the functions of wireless frequency filtering, frequency conversion and amplification, it may further provide demodulation/decoding, routing/conversion, coding/modulation functions, and have some or all of functions of the base station.

In the NTN, one or more gateways may be included for communication between the satellite and the terminal.

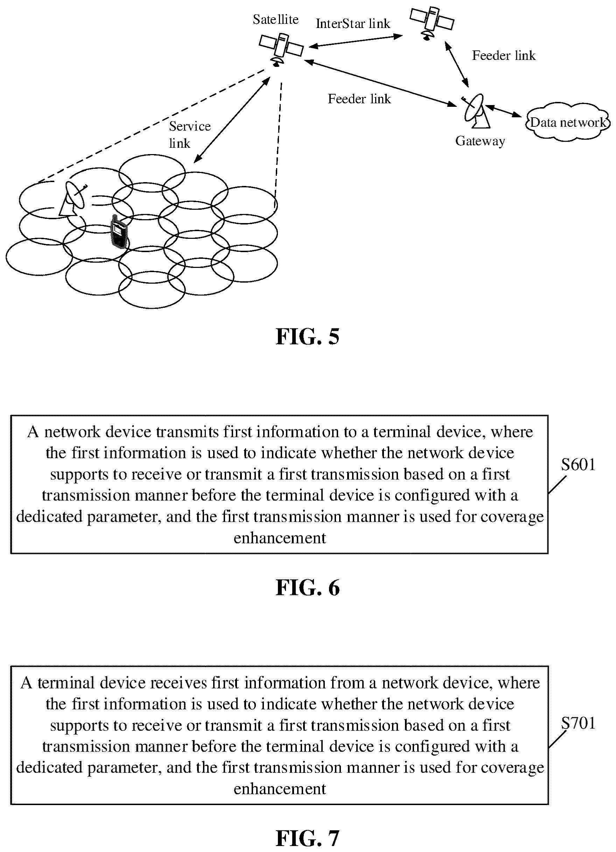

FIGS. 4 and 5 respectively illustrate schematic diagrams of NTN scenarios based on a transparent payload satellite and regenerative payload satellites.

As shown in FIG. 4, for the NTN scenario based on the transparent payload satellite, the commutation between a gateway and a satellite may be performed through a feeder link, and the commutation between the satellite and a terminal may be performed through a service link. As shown in FIG. 5, for the NTN scenario based on the regenerative payload satellites, the commutation between a satellite and a satellite may be performed through an InterStar link, the commutation between a gateway and the satellites may be performed through feeder links, and the commutation between the satellite and a terminal may be performed through a service link.

In order to facilitate the understanding of the technical solutions in the embodiments of the present disclosure, the related technologies of the embodiments of the present disclosure are described below. The following related technologies, as optional solutions, may be combined arbitrarily with the technical solutions in the embodiments of the present disclosure, and all of the combinations fall within the scope of protection of the embodiments of the present disclosure.

It should be noted that FIGS. 1 to 5 are merely illustrative examples of the system in which the present disclosure is applied. Of course, the methods shown in the embodiments of the present disclosure may further be applied to other systems. In addition, terms "system" and "network" are often used interchangeably in the present disclosure. A term "and/or" in the present disclosure is only an association relationship describing associated objects, and indicates that there may be three relationships. For example, A and/or B may indicate three cases: existence of A alone, existence of A and B simultaneously, and existence of B alone. Furthermore, a character "/" in the present disclosure generally indicates that preceding and following associated objects are in an "or" relationship. It should also be understood that "indicate" mentioned in the embodiments of the present disclosure may be a direct indication or an indirect indication, or may mean that there is an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond" mentioned in the embodiments of the present disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that "predefined" or "predefined rule(s)" mentioned in the embodiments of the present disclosure may be implemented by prestoring corresponding code(s), table(s), or other ways that may be used to indicate related information in devices (e.g., including the terminal device and the network device), and the specific implementation(s) are not limited in the present disclosure. For example, the "predefined" may refer to those defined in a protocol. It should also be understood that in the embodiments of the present disclosure, the term "protocol" may refer to a standard protocol in the field of communications, such as a LTE protocol, a NR protocol, and a related protocol applied in a future communication system, which is not limited in the present disclosure.

In order to facilitate the understanding of the technical solutions in the embodiments of the present disclosure, the related technologies of the embodiments of the present disclosure are described below. The following related technologies, as optional solutions, may be combined arbitrarily with the technical solutions in the embodiments of the present disclosure, and all of the combinations fall within the scope of protection of the embodiments of the present disclosure.

Determination for a transport block size (TBS) of a physical downlink shared channel (PDSCH):

for a PDSCH scheduled by DCI 1_0, 1_1, or 1_2 with CRC scrambled by C-RNTI, MCS-C-RNTI, TC-RNTI, CS-RNTI or SI-RNTI, the terminal should determine the TBS as follows.

1) First, the number of resource elements (REs) within a slot is determined (the number of REs ($N_{RE}$) within the slot is determined firstly).

To begin with, a formula $N'_{RE} = N_{SC}^{RB} * N_{symb}^{sh} - N_{DMRS}^{PRB} - N_{oh}^{PRB}$ is used to determine the number of REs for PDSCH transmission within a physical resource block (PRB). Here, $N_{SC}^{RB} = 12$ is the number of subcarriers within a PRB, $N_{symb}^{sh}$ is the number of symbols allocated for PDSCH within a slot, $N_{DMRS}^{PRB}$ is the number of REs for DMRS per PRB in a scheduling duration, and $N_{oh}^{PRB}$ is signaling overhead configured by a higher-layer parameter.

Then, a formula $N_{RE} = \min(156, N'_{RE}) * n_{PRB}$ is used to determine the total number of REs ($N_{RE}$) for the PDSCH transmission. Here, $n_{PRB}$ is the total number of PRBs allocated to the terminal.

2) Subsequently, a formula $N_{info} = N_{RE} * R * Q_m * v$ is used to acquire an unquantized intermediate variable $N_{info}$. Here, $R$ is a target code rate, $Q_m$ is a modulation order, and v is the number of transmission layers.

3) Finally, $N_{info}$ is quantized to determine the TBS.

For a PDSCH scheduled by DCI 1_0 with CRC scrambled by P-RNTI, RA-RNTI or MsgB-RNTI, when determining the TBS, the above operation 2) is modified, and the scaling of $N_{info} = N_{RE} * R * Q_m * v$ is applied to the calculation process of $N_{info}$. Here, a scaling factor $S$ is determined based on a transport block (TB) scaling field indication in the DCI 1_0.

Table 1 Scaling factors for N_info corresponding to P-RNTI, RA-RNTI and MsgB-RNTI

| TB scaling field | Scaling factor |
| --- | --- |
| 00 | 1 |
| 01 | 0.5 |
| 10 | 0.25 |
| 11 | |

The TBS scaling can effectively reduce information bits without changing the number of time-frequency resources occupied by the PDSCH transmission, thereby improving the downlink coverage performance by lowering the code rate.

Transmission of PDSCH repetition:

When receiving the PDSCH scheduled by the DCI 1_1 or 1_2 with CRC scrambled by C-RNTI, MCS-C-RNTI or CS-RNTI, if the terminal is configured with pdsch-AggregationFactor=K by the higher-layer parameter, the same symbol allocation is applied in K consecutive slots. The terminal expects the TB to be repeated within the symbol allocation of each of the K consecutive slots, and the PDSCH is restricted to a single transmission layer.

A redundancy version (RV) applied to the n-th transmission occasion of the TB is determined according to Table 2, where n=0, 1,..., K-1.

Table 2 RVs applied when the higher-layer parameter *pdsch-AggregationFactor* exists

| $rv_{id}$ indicated by the DCI for scheduling PDSCH | $rv_{id}$ applied for the n-th transmission occasion | | | |
| --- | --- | --- | --- | --- |
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

From the above, it is known that the coverage enhancement technology is not applicable to all uplink and downlink transmissions. For example, the transmission of PDSCH repetition is only applicable to the PDSCH(s) after the terminal is configured with a dedicated parameter, and the TBS scaling is only applicable to some PDSCHs. Furthermore, before the terminal is configured with the dedicated parameter, repetition of transmission is supported only for Msg3 PUSCH.

In communication scenarios with limited coverage performance, such as an NTN system, the uplink and downlink transmissions that do not support the coverage enhancement technology may be unable to meet the coverage requirement. Particularly, before the terminal is configured with the dedicated parameter, if the uplink and downlink transmissions cannot be successfully performed, it may cause that the terminal is unable to access the network, which has a significant impact on the system performance. Therefore, it is necessary to enhance the uplink and downlink transmissions before the terminal is configured with the dedicated parameter, thereby improving their coverage performances.

To facilitate the understanding of the technical solutions in the embodiments of the present disclosure, the technical solutions of the present disclosure are described in detail below through specific embodiments. The above related technologies, as optional solutions, may be combined arbitrarily with the technical solutions in the embodiments of the present disclosure, and all of the combinations fall within the scope of protection of the embodiments of the present disclosure. The embodiments of the present disclosure include at least part of the following content.

Based on this, an embodiment of the present disclosure provides a method for wireless communication as shown in FIG. 6, which is applied to a network device. The method includes the following operation S601.

At block S601, the network device transmits first information to a terminal device. The first information is used to indicate whether the network device supports to receive or transmit a first transmission based on a first transmission manner before the terminal device is configured with a dedicated parameter, and the first transmission manner is used for coverage enhancement.

An embodiment of the present disclosure provides a method for wireless communication as shown in FIG. 7, which is applied to a terminal device. The method includes the following operation S701.

At block S701, the terminal device receives first information from a network device. The first information is used to indicate whether the network device supports to receive or transmit a first transmission based on a first transmission manner before the terminal device is configured with a dedicated parameter, and the first transmission manner is used for coverage enhancement.

In the embodiments of the present disclosure, in a case where the first information is used to indicate that the network device supports to receive or transmit the first transmission based on the first transmission manner for coverage enhancement before the terminal device is configured with the dedicated parameter, the uplink and downlink coverage performances of the terminal device before the terminal device is configured with the dedicated parameter can be improved, thereby avoiding the situation where the terminal device is unable to access the network.

In some embodiments, the first transmission manner may include at least one of the following:

transmission of physical downlink shared channel (PDSCH) repetition;
transport block size (TBS) scaling for PDSCH; or
transmission of physical uplink shared channel (PUSCH) repetition.

It may be understood that, before the terminal device is configured with the dedicated parameter, if the first transmission manner includes the transmission of PDSCH repetition, the network device may support to transmit the PDSCH based on the transmission of PDSCH repetition; if the first transmission manner includes the TBS scaling for PDSCH, the network device may support to transmit the PDSCH based on the TBS scaling for PDSCH; and if the first transmission manner includes the transmission of PUSCH repetition, the network device may support to receive the PUSCH based on the transmission of PUSCH repetition. Of course, the first transmission manner may also include any two transmission manners or three transmission manners, which will not be repeated herein.

The dedicated parameter of the terminal device may include a radio resource control (RRC) configuration parameter dedicated to the terminal. The RRC configuration parameter dedicated to the terminal may at least include a bandwidth part (BWP) parameter dedicated to the terminal and the repetition number of transmission.

Herein, the transmission of PDSCH repetition may be understood as repetition of TB transmission on the PDSCH, the TBS scaling for PDSCH may be understood as scaling for the TBS carried by the PDSCH, and the transmission of PUSCH repetition may be understood as repetition of TB transmission on the PUSCH.

In some embodiments, the first transmission may include at least one of the following:

a transmission during a random access procedure; or
a transmission after the random access procedure and before the terminal device is configured with the dedicated parameter.

It may be understood that, before configuring the dedicated parameter for the terminal device, the transmission of PDSCH (i.e., the first transmission) may refer to transmission of PDSCH during the random access procedure. An example is the PDSCH scheduled by the DCI 1_0 with CRC scrambled by using the RA-RNTI, i.e., a message 2 (Msg2) PDSCH (the Msg2 is carried by the PDSCH). Another example is the PDSCH scheduled by the DCI 1_0 with CRC scrambled by using TC-RNTI, i.e., a message 4 (Msg4) PDSCH (the Msg4 is carried by the PDSCH).

It may be understood that, before configuring the dedicated parameter for the terminal device, the transmission of PDSCH (i.e., the first transmission) may also refer to transmission of PDSCH after the random access procedure and before the terminal device is configured with the dedicated parameter, such as the PDSCH that carries a dedicated parameter configuration message for the terminal device.

It may be understood that, before configuring the dedicated parameter for the terminal device, the transmission of PUSCH (i.e., the first transmission) may refer to transmission of PUSCH after the random access procedure and before the terminal device is configured with the dedicated parameter, such as the PUSCH that carries an RRC connection establishment completion message.

In some embodiments, the first information may include a first parameter. The first parameter may be used to indicate whether the network device supports to receive or transmit the first transmission based on the first transmission manner before the terminal is configured with the dedicated parameter.

In a possible implementation, when the first parameter is included in the first information, it may represent that the network device supports to receive or transmit the first transmission based on the first transmission manner before the terminal is configured with the dedicated parameter. When the first parameter is not included in the first information, it may represent that the network device does not support to receive or transmit the first transmission based on the first transmission manner before the terminal is configured with the dedicated parameter.

In another possible implementation, by assigning different values to the first parameter included in the first information, it may represent that the network device supports or does not support to receive or transmit the first transmission based on the first transmission manner before the terminal is configured with the dedicated parameter.

In some embodiments, when the first parameter is included in the first information and is configured as "enabled", it may represent that the network device supports to receive or transmit the first transmission based on the first transmission manner before the terminal is configured with the dedicated parameter.

In some embodiments, the first information may include a second parameter. The second parameter may be a parameter for the first transmission manner.

In some embodiments, in a case where the network device supports to receive or transmit the first transmission based on the first transmission manner before the terminal is configured with the dedicated parameter, the first information may further include the second parameter. As such, the terminal device may perform the first transmission manner based on the second parameter.

In some embodiments, the first information may be carried by one of the following:

system information; or
a random access response (RAR) message.

That is, the first information may be carried by the system information, e.g., SIB1. In addition, the first information may also be carried by the RAR message.

In the method for wireless communication provided in the embodiments of the present disclosure, and the network device may be further configured to perform the following processing.

The network device may receive second information from the terminal device. The second information may be used for at least one of the following:

requesting to receive or transmit the first transmission based on the first transmission manner;

indicating a capability to receive or transmit the first transmission based on the first transmission manner; or requesting a transmission factor, where the transmission factor includes a repetition number of transmission and/or a scaling factor.

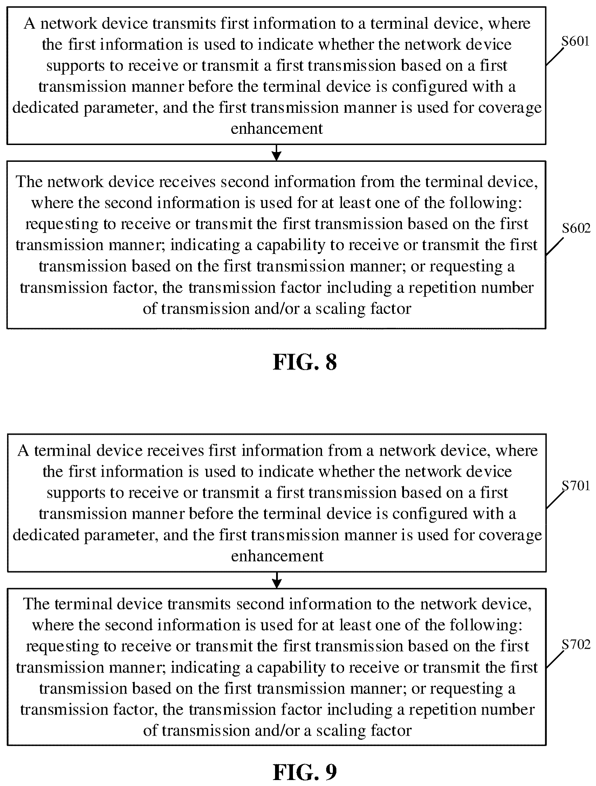

In one example, a method for wireless communication according to an embodiment of the present disclosure is shown in FIG. 8. The method includes the following operations S601 and S602.

At block S601, a network device transmits first information to a terminal device. The first information is used to indicate whether the network device supports to receive or transmit a first transmission based on a first transmission manner before the terminal device is configured with a dedicated parameter, and the first transmission manner is used for coverage enhancement.

At block S602, the network device receives second information from the terminal device. The second information is used for at least one of the following:

requesting to receive or transmit the first transmission based on the first transmission manner;
indicating a capability to receive or transmit the first transmission based on the first transmission manner; or
requesting a transmission factor, where the transmission factor includes a repetition number of transmission and/or a scaling factor.

That is, after transmitting the first information to the terminal device, the network device may receive the second information from the terminal device.

In the method for wireless communication provided in the embodiments of the present disclosure, the terminal device may be further configured to perform the following processing.

The terminal device transmits the second information to the network device. The second information is used for at least one of the following:

requesting to receive or transmit the first transmission based on the first transmission manner;
indicating a capability to receive or transmit the first transmission based on the first transmission manner; or
requesting a transmission factor, where the transmission factor includes a repetition number of transmission and/or a scaling factor.

In one example, a method for wireless communication according to an embodiment of the present disclosure is shown in FIG. 9. The method includes the following operations S701 and S702.

At block S701, a terminal device receives first information from a network device. The first information is used to indicate whether the network device supports to receive or transmit a first transmission based on a first transmission manner before the terminal device is configured with a dedicated parameter, and the first transmission manner is used for coverage enhancement.

At block S702, the terminal device transmits second information to the network device. The second information is used for at least one of the following:

requesting to receive or transmit the first transmission based on the first transmission manner;
indicating a capability to receive or transmit the first transmission based on the first transmission manner; or
requesting a transmission factor, where the transmission factor includes a repetition number of transmission and/or a scaling factor.

That is, after receiving the first information from the network device, the terminal device may transmit the second information to the network device.

In some embodiments, if the first transmission manner includes the transmission of PDSCH repetition, the second information may be used for at least one of the following: requesting to receive the PDSCH based on the transmission of PDSCH repetition; indicating the capability to receive the PDSCH based on the transmission of PDSCH repetition; or requesting the repetition number of PDSCH transmission.

If the first transmission manner includes the TBS scaling for PDSCH, the second information may be used for at least one of the following: requesting to receive the PDSCH based on the TBS scaling for PDSCH; indicating the capability to receive the PDSCH based on the TBS scaling for PDSCH; or requesting the TBS scaling factor for PDSCH.

If the first transmission manner includes the transmission of PUSCH repetition, the second information may be used for at least one of the following: requesting to transmit the PUSCH based on the transmission of PUSCH repetition; indicating the capability to transmit the PUSCH based on the transmission of PUSCH repetition; or requesting the repetition number of PUSCH transmission.

In some embodiments, the second information may be carried by one of the following:

a message 1 (Msg1); or

a message 3 (Msg3).

That is, the second information may be carried by the Msg1. For example, a random access procedure may be selected to be initiated on a random access resource associated with the first transmission manner. Optionally, the random access resource associated with the first transmission manner may be further associated with a transmission factor. If different random access resources are associated with different transmission factors (such as X1, X2, or X3), the terminal device may select to initiate the random access procedure on a certain random access resource, to request a corresponding transmission factor from the network device.

The second information may also be carried by the Msg3.

In some embodiments, the second information may be included in one of the following in the Msg3: a media access control (MAC) control element (CE);

radio resource control (RRC) signaling;

a logical channel identification (LCID) corresponding to a common control channel (CCCH); or

a reserved bit in a MAC sub-header.

In an implementation, the second information may be carried by the MAC CE.

For example, 1 bit in a payload of a first MAC CE may be used to carry the second information. For example, when the bit is set to 1, it may indicate: requesting to receive or transmit the first transmission based on the first transmission manner, and/or indicating the capability to receive or transmit the first transmission based on the first transmission manner. Additionally, when the bit is set to 0, it may indicate: not requesting to receive or transmit the first transmission based on the first transmission manner, and/or not indicating the capability to receive or transmit the first transmission based on the first transmission manner. Optionally, 2 bits in the payload of the first MAC CE may be used to request a transmission factor. For example, bit field values of "00", "01", "10" and "11" may represent transmission factors such as X1, X2, X3, and not requesting the transmission factor, respectively.

For another example, the second information may be carried by a second MAC CE. The second MAC CE may correspond to one LCID and have a payload size of 0. If the terminal device transmits the second MAC CE in the Msg3, it may indicate: requesting to receive or transmit the first transmission based on the first transmission manner, and/or indicating the capability to receive or transmit the first transmission based on the first transmission manner. If the terminal device does not transmit the second MAC CE in the Msg3, it may indicate: not requesting to receive or transmit the first transmission based on the first transmission manner, and/or not indicating the capability to receive or transmit the first transmission based on the first transmission manner. Optionally, a third MAC CE with different LCIDs may be introduced to be associated with different transmission factors, such as X1, X2 or X3. By transmitting the third MAC CE associated with the transmission factor in the Msg3, the terminal device may request the corresponding transmission factor from the network device.

For yet another example, the second information may be carried by a second MAC CE and a fourth MAC CE. Each of the second MAC CE and the fourth MAC CE may correspond to one LCID and have a payload size of 0. If the terminal device transmits the second MAC CE in the Msg3, it may indicate: requesting to receive or transmit the first transmission based on the first transmission manner, and/or indicating the capability to receive or transmit the first transmission based on the first transmission manner. If the terminal device transmits the fourth MAC CE in the Msg3, it may indicate: not requesting to receive or transmit the first transmission based on the first transmission manner, and/or not indicating the capability to receive or transmit the first transmission based on the first transmission manner. Optionally, a third MAC CE with different LCIDs may be introduced to be associated with different transmission factors, such as X1, X2 or X3. By transmitting the third MAC CE associated with the transmission factor in the Msg3, the terminal device may request the corresponding transmission factor from the network device.

In another implementation, the second information may be carried by the RRC signaling. For example, a first reserved bit field in the existing RRC signaling corresponding to the Msg3 may be used to request to receive or transmit the first transmission based on the first transmission manner, and/or to indicate the capability to receive or transmit the first transmission based on the first transmission manner. Optionally, the transmission factor may be carried by a second reserved bit field in the RRC signaling. For example, values "00", "01", "10" and "11" of the second reserved bit field may represent transmission factors such as X1, X2, X3, and not requesting the transmission factor, respectively.

In another implementation, the second information may be carried by the LCID corresponding to the CCCH. A channel length of the CCCH typically includes 48 bits and 64 bits. Therefore, the CCCH may specifically include a first common control channel CCCH1 (the channel length may be 48 bits) and/or a second common control channel CCCH2 (the channel length may be 64 bits). Here, LCIDs corresponding to the CCCH1 and CCCH2 are unoccupied LCIDs. Subsequently, based on the first transmission manner and the required channel length, the terminal device may determine the corresponding CCCH. When a first condition is met, a CCCH service data unit (SDU) transmitted by the terminal device in the Msg3 may be an SDU corresponding to the CCCH1 or CCCH2. Otherwise, the CCCH SDU transmitted by the terminal device in the Msg3 may be an SDU corresponding to a CCCH3 (an LCID corresponding to the CCCH3 is an occupied LCID). The CCCH SDUs are distinguished by different LCIDs, which are included in MAC sub-headers located before the CCCH SDUs. The first condition may include: requesting to receive or transmit the first transmission based on the first transmission manner, and/or indicating the capability to receive or transmit the first transmission based on the first transmission manner. Optionally, the first common control channel CCCH1 or the second common control channel CCCH2 with different LCIDs may be introduced to be associated with different transmission factors, such as X1, X2 or X3. By transmitting the SDU corresponding to the CCCH1 or CCCH2 associated with the transmission factor in the Msg3, the terminal device may request the corresponding transmission factor from the network device.

In another implementation, the second information may be carried by a first reserved bit field in an MAC sub-header. For example, when the first reserved bit field is set to 1, it may indicate: requesting to receive or transmit the first transmission based on the first transmission manner, and/or indicating the capability to receive or transmit the first transmission based on the first transmission manner. Optionally, the transmission factor may be carried by a second reserved bit field in the MAC sub-header. For example, values "00", "01", "10" and "11" of the second reserved bit field may represent transmission factors such as X1, X2, X3, and not requesting the transmission factor, respectively.

In the method for wireless communication provided in the embodiments of the present disclosure, the network device may be further configured to perform the following processing.

The network device may transmit third information to the terminal device. The third information may be used to determine a target transmission factor, and the target transmission factor may be a transmission factor applied in the first transmission manner.

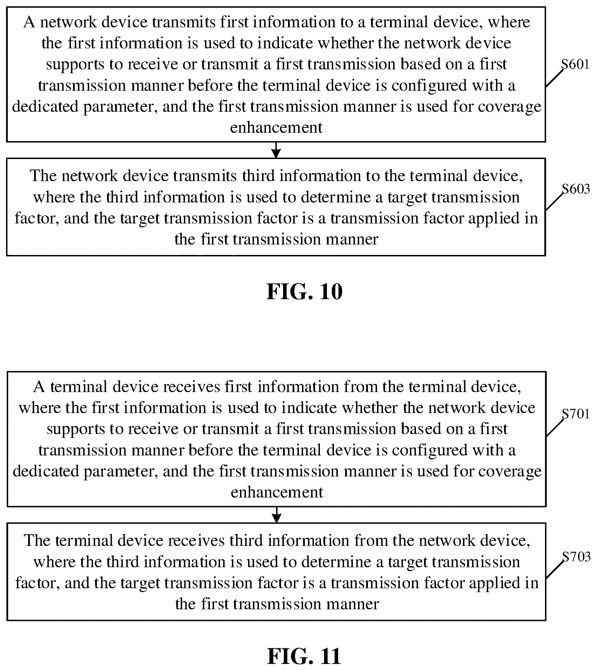

In one example, a method for wireless communication according to an embodiment of the present disclosure is shown in FIG. 10. The method includes the following operations S601 and S603.

At block S601, a network device transmits first information to a terminal device. The first information is used to indicate whether the network device supports to receive or transmit a first transmission based on a first transmission manner before the terminal device is configured with a dedicated parameter, and the first transmission manner is used for coverage enhancement.

At block S603, the network device transmits third information to the terminal device. The third information is used to determine a target transmission factor, and the target transmission factor is a transmission factor applied in the first transmission manner.

That is, after transmitting the first information to the terminal device, the network device may further transmit the third information to the terminal device.

In the method for wireless communication provided in the embodiments of the present disclosure, the terminal device may be further configured to perform the following processing.

The terminal device may receive third information from the network device. The third information may be used to determine a target transmission factor, and the target transmission factor is a transmission factor applied in the first transmission manner.

In one example, a method for wireless communication according to an embodiment of the present disclosure is shown in FIG. 11. The method includes the following operations S701 and S703.

At block S701, a terminal device receives first information from a network device. The first information is used to indicate whether the network device supports to receive or transmit a first transmission based on a first transmission manner before the terminal device is configured with a dedicated parameter, and the first transmission manner is used for coverage enhancement.

At block S703, the terminal device receives third information from the network device. The third information is used to determine a target transmission factor, and the target transmission factor is a transmission factor applied in the first transmission manner.

That is, after receiving the first information from the network device, the terminal device may further receive the third information from the network device.

In some embodiments, if the first transmission manner includes the transmission of PDSCH repetition, the transmission factor may include the repetition number of PDSCH transmission.

If the first transmission manner includes the TBS scaling for PDSCH, the transmission factor may include the TBS scaling factor for PDSCH.

If the first transmission manner includes the transmission of PUSCH repetition, the transmission factor may include the repetition number of PUSCH transmission.

In some embodiments, the target transmission factor may be one of the following:

a first transmission factor, where the first transmission factor is a transmission factor in a first transmission factor set;
a second transmission factor, where the second transmission factor is a default transmission factor; or
a third transmission factor, where the third transmission factor is a transmission factor carried in the first information.

In some embodiments, the first transmission factor set may be one of the following:

a transmission factor set carried in the first information; or
a default transmission factor set.

That is, the first transmission factor set may be carried in the first information, or may be the default transmission factor set.

In a possible implementation, the first transmission factor set may be carried in the first information, or the default transmission factor set may be set in the first information.

Based on this, in some embodiments, when the third information is used to indicate the first transmission factor, the target transmission factor may be the first transmission factor.

That is, when the third information transmitted by the network device to the terminal device includes a transmission factor in the first transmission factor set, the transmission factor in the first transmission factor set may be taken as the transmission factor applied in the first transmission manner.

In some embodiments, when the third information is used to indicate a value outside the first transmission factor set, the target transmission factor may be the second transmission factor, or the first transmission manner may not be used for the first transmission.

That is, when the third information transmitted by the network device to the terminal device includes the value outside the first transmission factor set, the default transmission factor may be applied in the first transmission manner, or the first transmission manner may not be used for the first transmission.

In some embodiments, the terminal device does not expect the third information to indicate the value outside the first transmission factor set.

In another possible implementation, the third transmission factor may be carried in the first information, or the default second transmission factor may be set in the first information.

Based on this, in some embodiments, the third information may be used to indicate whether the second transmission factor or the third transmission factor is applied in the first transmission manner.

That is, the third information transmitted by the network device to the terminal device may indicate whether the third transmission factor carried in the first information is applied in the first transmission manner, or whether the default second transmission factor is applied in the first transmission manner.

In some embodiments, when the third information is used to indicate that the second transmission factor or the third transmission factor is applied in the first transmission manner, the target transmission factor may be the second transmission factor or the third transmission factor.

That is, when the third information transmitted by the network device to the terminal device indicates that the third transmission factor carried in the first information is applied in the first transmission manner, the third transmission factor may be applied in the first transmission manner. When the third information transmitted by the network device to the terminal device indicates that the default second transmission factor is applied in the first transmission manner, the second transmission factor may be applied in the first transmission manner.

In some embodiments, when the third information is used to indicate that the second transmission factor or the third transmission factor is not applied in the first transmission manner, the first transmission manner may not be used for the first transmission.

That is, when the third information transmitted by the network device to the terminal device indicates that the third transmission factor carried in the first information is not applied in the first transmission manner, the first transmission manner may not be used for the first transmission. When the third information transmitted by the network device to the terminal device indicates that the default second transmission factor is not applied in the first transmission manner, the first transmission manner may not be used for the first transmission.

In some embodiments, the third information may be carried by one of the following:

downlink control information (DCI); or
an RAR message.

That is, the third information may be carried by the DCI, such as the DCI 1_0 for scheduling the PDSCH and the DCI 0_0 for scheduling the PUSCH. The third information may also be carried by the RAR message.

Based on the above embodiments, when the method for wireless communication provided in the embodiments of the present disclosure is applied to the network device, after transmitting the first information to the terminal device, the network device may receive the second information from the terminal device; and then, the network device may further transmit the third information to the terminal device. That is, the network device may sequentially perform the operations S601, S602 and S603.

Based on the above embodiments, when the method for wireless communication provided in the embodiments of the present disclosure is applied to the terminal device, after receiving the first information from the network device, the terminal device may transmit the second information to the network device; and then, the terminal device may further receive the third information from the network device. That is, the terminal device may sequentially perform the operations S701, S702 and S703.

Based on this, in some embodiments, the target transmission factor may be one of the following:

a first transmission factor, where the first transmission factor is a transmission factor in a first transmission factor set;
a second transmission factor, where the second transmission factor is a default transmission factor; or
a third transmission factor, where the third transmission factor is a transmission factor carried in the first information or second information.

Here, an explanation is provided for the third transmission factor, which is the transmission factor carried in the second information.

It should be noted that the transmission factor (i.e., the target transmission factor) applied in the first transmission manner is a transmission factor requested by the terminal device. When the first transmission manner includes the transmission of PDSCH repetition, the second information received by the network device from the terminal device in the operation S702 may include a request for the repetition number K (e.g., K=2) of PDSCH transmission; and the third information transmitted by the network device to the terminal device may include the repetition number 2 (i.e., the target transmission factor) of PDSCH transmission, or may indicate to apply the repetition number K of PDSCH transmission requested by the terminal device. When the first transmission manner includes the transmission of PUSCH repetition, the second information received by the network device from the terminal device in the operation S702 may include a request for the repetition number K (e.g., K=2) of PUSCH transmission; and the third information transmitted by the network device to the terminal device may include the repetition number 2 (i.e., the target transmission factor) of PUSCH transmission, or may indicate to apply the repetition number K of PUSCH transmission requested by the terminal device. When the first transmission manner includes the TBS scaling for PDSCH, the second information received by the network device from the terminal device in the operation S702 may include a request for a TBS scaling factor S (e.g., S=0.5) for PDSCH; and the third information transmitted by the network device to the terminal device may include the TBS scaling factor 0.5 for PDSCH (i.e., the target transmission factor), or may indicate to apply the TBS scaling factor S for PDSCH requested by the terminal device.

The following describes the method for wireless communication according to the embodiments of the present disclosure.

In the embodiments of the present disclosure, the first transmission manner may include at least one of the following: transmission of PDSCH repetition, TBS scaling for PDSCH, or transmission of PUSCH repetition.

Based on different first transmission manners, the wireless communication according to the embodiments of the present disclosure includes, but is not limited to, the following embodiment 1, embodiment 2, and embodiment 3.

Embodiment 1: the first transmission manner before the terminal device is configured with the dedicated parameter may include the transmission of PDSCH repetition

In the embodiments of the present disclosure, the repetition of transmission may be supported for at least one PDSCH before the terminal device is configured with the dedicated parameter, thereby improving the downlink coverage performance.

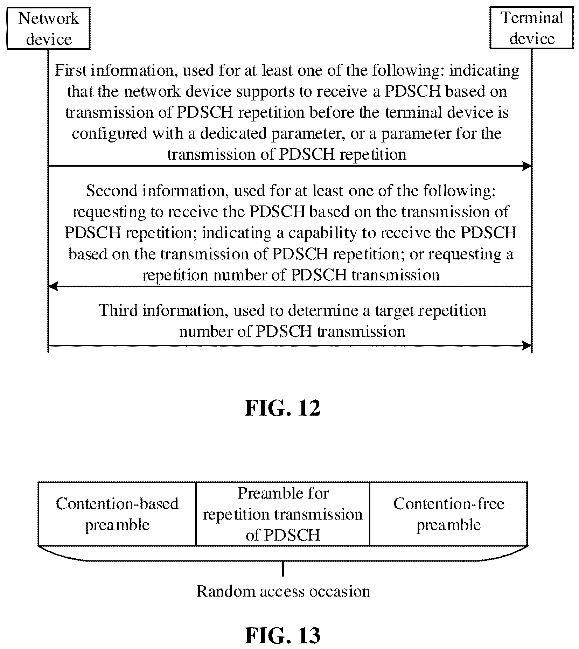

A process of transmission of PDSCH repetition before the terminal device is configured with the dedicated parameter in the embodiments of the present disclosure is shown in FIG. 12, which is applied to a wireless communication system including a terminal device and a network device. The method includes the following operations S1201 to S1203.

At block S1201, a network device transmits first information to a terminal device. The first information is used for at least one of the following: indicating that the network device supports to transmit a PDSCH based on transmission of PDSCH repetition before the terminal device is configured with a dedicated parameter, or a parameter for the transmission of PDSCH repetition.

At block S1202, the terminal device transmits second information to the network device. The second information is used for at least one of the following:

requesting to receive the PDSCH based on the transmission of PDSCH repetition;
indicating a capability to receive the PDSCH based on the transmission of PDSCH repetition; or
requesting a repetition number of PDSCH transmission.

At block S1203, the network device transmits third information to the terminal device. The third information is used to determine a target repetition number of PDSCH transmission.

In the embodiments of the present disclosure, the network device transmits the first information to the terminal device. In a case where the first information indicates that the network device supports to transmit the PDSCH based on the transmission of PDSCH repetition for coverage enhancement before the terminal device is configured with the dedicated parameter, the downlink coverage performance before the terminal device is configured with the dedicated parameter can be improved, thereby avoiding the situation where the terminal device is unable to access the network.

Firstly, the network device transmits the first information to the terminal device for indicating that the network device supports to transmit the PDSCH based on the transmission of PDSCH repetition before the terminal device is configured with the dedicated parameter.

For example, when a first parameter is included in the first information, or the first parameter is included in the first information and is configured as "enabled", it may represent that the network device supports to transmit the PDSCH based on the transmission of PDSCH repetition before the terminal device is configured with the dedicated parameter.

In some embodiments, the first information may further include a second parameter, and the second parameter may be a parameter for the transmission of PDSCH repetition.

In some embodiments, the second parameter may include at least one of the following: a random access resource associated with the transmission of PDSCH repetition, a reference signal received power (RSRP) threshold corresponding to the transmission of PDSCH repetition, a repetition number of PDSCH transmission, or a set of repetition numbers of PDSCH transmission.

In the embodiments of the present disclosure, the random access resource may be used for the terminal device to perform a random access procedure. The random access resource associated with the transmission of PDSCH repetition may be a designated physical random access channel (PRACH) format, a designated PRACH preamble, a designated RO (PRACH occasion), or any other configurable random access resources.

Taking a PRACH preamble as an example of the random access resource associated with the transmission of PDSCH repetition, on a basis of a contention-based PRACH preamble and a contention-free PRACH preamble provided in a random access occasion, the PRACH preamble associated with the transmission of PDSCH repetition may be provided in the first information, and the terminal device may select the PRACH preamble associated with the transmission of PDSCH repetition to initiate the random access procedure.

The PRACH preamble associated with the transmission of PDSCH repetition provided in the first information in the embodiments of the present disclosure is shown in FIG. 13. The number of preambles provided in the random access occasion may be fixed. On the basis of the contention-based PRACH preamble and the contention-free PRACH preamble provided in the random access occasion, a part of the preambles (i.e., the PRACH preamble associated with the transmission of PDSCH repetition) may be allocated for the transmission of PDSCH repetition.

In the embodiments of the present disclosure, based on the RSRP threshold corresponding to the transmission of PDSCH repetition, the terminal device may determine whether to request to receive the PDSCH based on the transmission of PDSCH repetition, and/or to indicate the capability to receive the PDSCH based on the transmission of PDSCH repetition, and/or to request the repetition number of PDSCH transmission.

For example, when the RSRP threshold corresponding to the transmission of PDSCH repetition is -126 dBm, if an RSRP measured by the terminal device is lower than the RSRP threshold (-126 dBm), the terminal device may select the PRACH preamble associated with the transmission of PDSCH repetition to initiate the random access procedure. That is, the terminal device may request to the network device for receiving the PDSCH based on the transmission of PDSCH repetition, and/or indicate to the network device the capability to receive the PDSCH based on the transmission of PDSCH repetition, and/or request to the network device for the repetition number of PDSCH transmission.

In the embodiments of the present disclosure, the repetition number of PDSCH transmission may be carried in the first information, or may be agreed in a protocol (i.e., default) between the network device and the terminal device. Regarding the repetition number of PDSCH transmission, it may be only valid for the terminal(s) that request to receive the PDSCH based on the transmission of PDSCH repetition, and/or indicate the capability to receive the PDSCH based on the transmission of PDSCH repetition, and/or request the repetition number of PDSCH transmission. For example, the repetition number of PDSCH transmission provided in the first information may be K=2, 4, or 8; and after the terminal device requests to receive the PDSCH based on the transmission of PDSCH repetition, and/or indicates the capability to receive the PDSCH based on the transmission of PDSCH repetition, and/or requests the repetition number of PDSCH transmission, the terminal device may receive the PDSCH K times with repetition based on the manner of the transmission of PDSCH repetition.

In the embodiments of the present disclosure, the set of repetition numbers of PDSCH transmission may be carried in the first information, or may be agreed in a protocol (i.e., default) between the network device and the terminal device. Regarding the set of repetition numbers of PDSCH transmission, it may be only valid for the terminal(s) that request to receive the PDSCH based on the transmission of PDSCH repetition, and/or indicate the capability to receive the PDSCH based on the transmission of PDSCH repetition, and/or request the repetition number of PDSCH transmission. For example, the set of repetition numbers of PDSCH transmission provided in the first information may be K={1, 2, 4, 8}; and after the terminal device requests to receive the PDSCH based on the transmission of PDSCH repetition, and/or indicates the capability to receive the PDSCH based on the transmission of PDSCH repetition, and/or requests the repetition number of PDSCH transmission, the terminal device may receive the PDSCH K1 times with repetition based on the manner of the transmission of PDSCH repetition. Here, K1 may be a value in the set K.

The first information may be carried by system information, e.g., SIB1. The first information may also be carried by an RAR message.

Subsequently, the terminal device transmits the second information to the network device for at least one of the following: requesting to receive the PDSCH based on the transmission of PDSCH repetition; indicating the capability to receive the PDSCH based on the transmission of PDSCH repetition; or requesting the repetition number of PDSCH transmission.

The second information may be carried by an Msg1. For example, a random access resource associated with the transmission of PDSCH repetition may be selected to initiate a random access procedure. Optionally, the random access resource associated with the transmission of PDSCH repetition may be further associated with the repetition number of PDSCH transmission. If different random access resources are associated with different repetition numbers (e.g., 2, 4, or 8) of PDSCH transmission, the terminal device may select to initiate the random access procedure on a certain random access resource, to request the corresponding repetition number of PDSCH transmission from the network device.

The second information may also be carried by an Msg3, and there may be specific solutions as follows.

In an implementation, the second information may be carried by an MAC CE.

For example, 1 bit in a payload of a first MAC CE may be used to carry the second information. For example, when the bit is set to 1, it may indicate: requesting to receive the PDSCH based on the transmission of PDSCH repetition, and/or indicating the capability to receive the PDSCH based on the transmission of PDSCH repetition. Additionally, when the bit is set to 0, it may indicate: not requesting to receive the PDSCH based on the transmission of PDSCH repetition, and/or not indicating the capability to receive the PDSCH based on the transmission of PDSCH repetition. Optionally, 2 bits in the payload of the first MAC CE may be used to request the repetition number of PDSCH transmission. For example, bit field values of "00", "01", "10" and "11" may represent the repetition numbers of PDSCH transmission of 2, 4, 8, and not requesting the transmission of PDSCH repetition, respectively.

For another example, the second information may be carried by a second MAC CE. The second MAC CE may correspond to one LCID and have a payload size of 0. If the terminal device transmits the second MAC CE in the Msg3, it may indicate: requesting to receive the PDSCH based on the transmission of PDSCH repetition, and/or indicating the capability to receive the PDSCH based on the transmission of PDSCH repetition. If the terminal device does not transmit the second MAC CE in the Msg3, it may indicate: not requesting to receive the PDSCH based on the transmission of PDSCH repetition, and/or not indicating the capability to receive the PDSCH based on the transmission of PDSCH repetition. Optionally, a third MAC CE with different LCIDs may be introduced to be associated with different repetition numbers (e.g., 2, 4, or 8) of PDSCH transmission. By transmitting the third MAC CE associated with the repetition number of PDSCH transmission in the Msg3, the terminal device may request the corresponding repetition number of PDSCH transmission from the network device.

For yet another example, the second information may be carried by a second MAC CE and a fourth MAC CE. Each of the second MAC CE and the fourth MAC CE may correspond to one LCID and have a payload size of 0. If the terminal device transmits the second MAC CE in the Msg3, it may indicate: requesting to receive the PDSCH based on the transmission of PDSCH repetition, and/or indicating the capability to receive the PDSCH based on the transmission of PDSCH repetition. If the terminal device transmits the fourth MAC CE in the Msg3, it may indicate: not requesting to receive the PDSCH based on the transmission of PDSCH repetition, and/or not indicating the capability to receive the PDSCH based on the transmission of PDSCH repetition. Optionally, a third MAC CE with different LCIDs may be introduced to be associated with different repetition numbers (e.g., 2, 4, or 8) of PDSCH transmission. By transmitting the third MAC CE associated with the repetition number of PDSCH transmission in the Msg3, the terminal device may request the corresponding repetition number of PDSCH transmission from the network device.

In another implementation, the second information may be carried by RRC signaling. For example, a first reserved bit field in the existing RRC signaling corresponding to the Msg3 may be used to request to receive the PDSCH based on the transmission of PDSCH repetition, and/or to indicate the capability to receive the PDSCH based on the transmission of PDSCH repetition. Optionally, the repetition number of PDSCH transmission may be carried by a second reserved bit field in the RRC signaling. For example, values "00", "01", "10" and "11" of the second reserved bit field may represent the repetition numbers of PDSCH transmission of 2, 4, 8, and not requesting the transmission of PDSCH repetition, respectively.

In another implementation, the second information may be carried by an LCID corresponding to a CCCH. A channel length of the CCCH typically includes 48 bits and 64 bits. Therefore, the CCCH may specifically include a first common control channel CCCH1 (the channel length may be 48 bits) and/or a second common control channel CCCH2 (the channel length may be 64 bits). Here, LCIDs corresponding to the CCCH1 and CCCH2 are unoccupied LCIDs. Subsequently, based on the first transmission manner and the required channel length, the terminal device may determine the corresponding CCCH. When a first condition is met, a CCCH SDU transmitted by the terminal device in the Msg3 may be an SDU corresponding to the CCCH1 or CCCH2. Otherwise, the CCCH SDU transmitted by the terminal device in the Msg3 may be an SDU corresponding to a CCCH3 (an LCID corresponding to the CCCH3 is an occupied LCID). The CCCH SDUs are distinguished by different LCIDs, which are included in MAC sub-headers located before the CCCH SDUs. The first condition may include: requesting to receive the PDSCH based on the transmission of PDSCH repetition, and/or indicating the capability to receive the PDSCH based on the transmission of PDSCH repetition. Optionally, the first common control channel CCCH1 or the second common control channel CCCH2 with different LCIDs may be introduced to be associated with different repetition numbers (e.g., 2/4/8) of PDSCH transmission. By transmitting the SDU corresponding to the CCCH1 or CCCH2 associated with the repetition number of PDSCH transmission in the Msg3, the terminal device may request the corresponding repetition number of PDSCH transmission from the network device.

In another implementation, the second information may be carried by a first reserved bit field in an MAC sub-header. For example, when the first reserved bit field is set to 1, it may indicate: requesting to receive the PDSCH based on the transmission of PDSCH repetition, and/or indicating the capability to receive the PDSCH based on the transmission of PDSCH repetition. Optionally, the repetition number of PDSCH transmission may be carried by a second reserved bit field in the MAC sub-header. For example, values "00", "01", "10" and "11" of the second reserved bit field may represent the repetition numbers of PDSCH transmission of 2, 4, 8, and not requesting the transmission of PDSCH repetition, respectively.

Finally, if the terminal device applies the set of repetition numbers of PDSCH transmission, the network device may transmit third information to the terminal device for determining the repetition number of PDSCH transmission that is ultimately applied to the transmission of PDSCH repetition. For example, after the terminal device requests to receive the PDSCH based on the transmission of PDSCH repetition and/or indicates the capability to receive the PDSCH based on the transmission of PDSCH repetition, the network device may further determine the third information based on the set of repetition numbers of PDSCH transmission in the first information or the default set of repetition numbers of PDSCH transmission in the protocol, such as K={1, 2, 4, 8}.

When the number of elements included in the set K of repetition numbers of PDSCH transmission provided in the first information or the number of elements included in the default set K of repetition numbers of PDSCH transmission is variable, a bit width P of a bit field required for the third information may be also different. For example, the set K of repetition numbers of PDSCH transmission may be: K={1, 2} including 2 candidate values for the repetition number of PDSCH transmission; K={ 1, 2, 4} including 3 candidate values for the repetition number of PDSCH transmission; or K={1, 2, 4, 8} including 4 candidate values for the repetition number of PDSCH transmission. For example, 1/2/2 bit(s) may be required for K={ 1, 2}/{1, 2, 4}/{1, 2, 4, 8}, respectively.

In order to ensure that the terminal device and the network device have the same understanding of the bit field of the third information, the bit width P of the bit field of the third information may be determined by $P = \lceil \log_2(I) \rceil$. Here, $\lceil * \rceil$ indicates rounding up, and I is the number of candidate values in the set K of repetition numbers of PDSCH transmission or the maximum number of configurable candidate values in the set K of repetition numbers of PDSCH transmission. For example, if I is the number of candidate values in the set K of repetition numbers of PDSCH transmission, the bit widths required for K={1, 2}/{1, 2, 4}/{1, 2, 4, 8} may be P=1/2/2. If I is the maximum number (i.e., 4) of configurable candidate values in the set K of repetition numbers of PDSCH transmission, the bit widths required for K={1, 2}/{1, 2, 4}/{1, 2, 4, 8} may be all P=2.

For example, for the set K={ 1, 2, 4} of repetition numbers of PDSCH transmission, the mapping relationship between the bit field of the third information and the repetition number of PDSCH transmission is shown in Table 3.

Table 3 Mapping relationship between the bit field of the third information and the repetition number of PDSCH transmission

| Bit field | The repetition number of PDSCH transmission |
|---|---|
| 00 | First value in the set K of repetition numbers of PDSCH transmission |
| 01 | Second value in the set K of repetition numbers of PDSCH transmission |
| 10 | Third value in the set K of repetition numbers of PDSCH transmission |
| 11 | |

It should be noted that, considering that a value $2^P$ that can be indicated by the bit filed of the third information may be greater than the number of candidate values in the set K of repetition numbers of PDSCH transmission, in order to ensure that the terminal device and the network device always have the same understanding of the repetition number of PDSCH transmission indicated by the bit field, it is required to be stipulated that: the terminal device does not expect to be indicated a value outside the set K of repetition numbers of PDSCH transmission; or when the terminal device is indicated the value outside the set K of repetition numbers of PDSCH transmission, the default repetition number of PDSCH transmission may be applied to the transmission of PDSCH repetition or a single transmission of PDSCH may be received.

For example, the network device may use 2 bits to indicate the repetition number of PDSCH transmission, and provide a set K={1, 2, 4} of repetition numbers of PDSCH transmission. In such case, the value $2^2=4$ that can be indicated by the bit field is greater than the number (i.e., 3) of candidate values in the set K. Therefore, it is required to be stipulated that: when the terminal device requests to the network device for receiving the PDSCH based on the transmission of PDSCH repetition, and/or indicates to the network device the capability to receive the PDSCH based on the transmission of PDSCH repetition, the terminal device may not expect to be indicated the value outside the K={1, 2, 4}, such as a bit field of "11"; or when the bit field indicates "11", the default repetition number (e.g., 2) of PDSCH transmission may be applied to the transmission of PDSCH repetition, or a single transmission of PDSCH may be received.

Furthermore, optionally, when the terminal device applies one repetition number of PDSCH transmission, the network device may transmit the third information to the terminal device, to enable the terminal device to determine, based on the third information, the repetition number of PDSCH transmission that is ultimately applied to the transmission of PDSCH repetition. For example, after the terminal device requests to receive the PDSCH based on the transmission of PDSCH repetition and/or indicates the capability to receive the PDSCH based on the transmission of PDSCH repetition, based on the repetition number of PDSCH transmission provided by the network device in the first information or the second information or the default repetition number of PDSCH transmission in the protocol, such as K=2/4/8, the terminal device may need to further receive the third information to determine whether to apply the repetition number of PDSCH transmission ultimately. For example, when the third information indicates "1", it may indicate to apply K, and when the third information indicates "0", it may indicate not to apply K.

The third information may be carried by DCI, such as the DCI 1_0 for scheduling the PDSCH. The third information may also be carried by RAR.

Embodiment 2: the first transmission manner before the terminal device is configured with the transmission parameter may include the transmission of PUSCH repetition

In the embodiments of the present disclosure, the repetition of transmission may be supported for at least one PUSCH before the terminal device is configured with the dedicated parameter, thereby improving the uplink coverage performance.

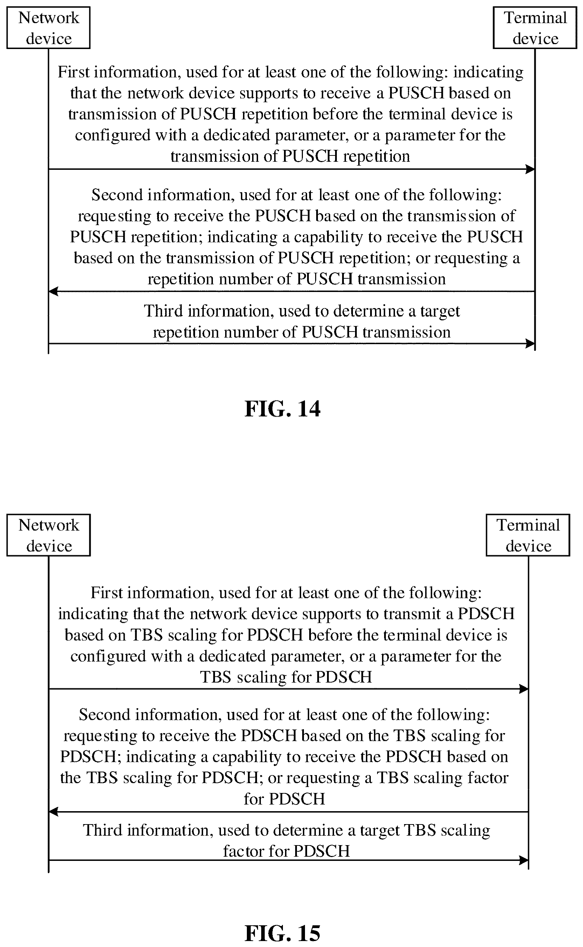

A process of transmission of PUSCH repetition before the terminal device is configured with the dedicated parameter in the embodiments of the present disclosure is shown in FIG. 14, which is applied to a wireless communication system including a terminal device and a network device. The method includes the following operations S1401 to S1403.

At block S1401, a network device transmits first information to a terminal device. The first information is used for at least one of the following: indicating that the network device supports to receive a PUSCH based on transmission of PUSCH repetition before the terminal device is configured with a dedicated parameter, or a parameter for the transmission of PUSCH repetition.

At block S1402, the terminal device transmits second information to the network device. The second information is used for at least one of the following:

requesting to transmit the PUSCH based on the transmission of PUSCH repetition;
indicating a capability to transmit the PUSCH based on the transmission of PUSCH repetition; or
requesting a repetition number of PUSCH transmission.

At block S 1403, the network device transmits third information to the terminal device. The third information is used to determine a target repetition number of PUSCH transmission.

In the embodiments of the present disclosure, the network device transmits the first information to the terminal device. In a case where the first information indicates that the network device supports to receive the PUSCH based on the transmission of PUSCH repetition for coverage enhancement before the terminal device is configured with the dedicated parameter, the uplink coverage performance before the terminal device is configured with the dedicated parameter can be improved, thereby avoiding the situation where the terminal device is unable to access the network.

Firstly, the network device transmits the first information to the terminal device for indicating that the network device supports to receive the PUSCH based on the transmission of PUSCH repetition before the terminal device is configured with the dedicated parameter.

For example, when a first parameter is included in the first information, or the first parameter is included in the first information and is configured as "enabled", it may represent that the network device supports to receive the PUSCH based on the transmission of PUSCH repetition before the terminal device is configured with the dedicated parameter.

In some embodiments, the first information may further include a second parameter, and the second parameter may be a parameter for the transmission of PUSCH repetition.

In some embodiments, the second parameter may include at least one of the following: a random access resource associated with the transmission of PUSCH repetition, a RSRP threshold corresponding to the transmission of PUSCH repetition, a repetition number of PUSCH transmission, or a set of repetition numbers of PUSCH transmission.

In the embodiments of the present disclosure, the random access resource may be used for the terminal device to perform a random access procedure. The random access resource associated with the transmission of PUSCH repetition may be a designated PRACH format, a designated PRACH preamble, a designated RO (PRACH occasion), or any other configurable random access resources.

Taking a PRACH preamble as an example of the random access resource associated with the transmission of PUSCH repetition, on a basis of a contention-based PRACH preamble and a contention-free PRACH preamble provided in a random access occasion, the PRACH preamble associated with the transmission of PUSCH repetition may be provided in the first information, and the terminal device may select the PRACH preamble associated with the transmission of PUSCH repetition to initiate the random access procedure.

The PRACH preamble associated with the transmission of PUSCH repetition provided in the first information in the embodiments of the present disclosure is shown in FIG. 13. The number of preambles provided in the random access occasion may be fixed. On the basis of the contention-based PRACH preamble and the contention-free PRACH preamble provided in the random access occasion, a part of the preambles (i.e., the PRACH preamble associated with the transmission of PUSCH repetition) may be allocated for the transmission of PUSCH repetition.

In the embodiments of the present disclosure, based on the RSRP threshold corresponding to the transmission of PUSCH repetition, the terminal device may determine whether to request to transmit the PUSCH based on the transmission of PUSCH repetition, and/or to indicate the capability to transmit the PUSCH based on the transmission of PUSCH repetition, and/or to request the repetition number of PUSCH transmission.

For example, when the RSRP threshold corresponding to the transmission of PUSCH repetition is -126 dBm, if an RSRP measured by the terminal device is lower than the RSRP threshold (-126 dBm), the terminal device may select the PRACH preamble associated with the transmission of PUSCH repetition to initiate the random access procedure. That is, the terminal device may request to the network device for transmitting the PUSCH based on the transmission of PUSCH repetition, and/or indicate to the network device the capability to transmit the PUSCH based on the transmission of PUSCH repetition, and/or request to the network device for the repetition number of PUSCH transmission.

In the embodiments of the present disclosure, the repetition number of PUSCH transmission may be carried in the first information, or may be agreed in a protocol (i.e., default) between the network device and the terminal device. Regarding the repetition number of PUSCH transmission, it may be only valid for the terminal(s) that request to transmit the PUSCH based on the transmission of PUSCH repetition, and/or indicate the capability to transmit the PUSCH based on the transmission of PUSCH repetition, and/or request the repetition number of PUSCH transmission. For example, the repetition number of PUSCH transmission provided in the first information may be $K=2, 4$, or $8$; and after the terminal device requests to transmit the PUSCH based on the transmission of PUSCH repetition, and/or indicates the capability to transmit the PUSCH based on the transmission of PUSCH repetition, and/or requests the repetition number of PUSCH transmission, the terminal device may transmit the PUSCH $K$ times with repetition based on the manner of the transmission of PUSCH repetition.

In the embodiments of the present disclosure, the set of repetition numbers of PUSCH transmission may be carried in the first information, or may be agreed in a protocol (i.e., default) between the network device and the terminal device. Regarding the set of repetition numbers of PUSCH transmission, it may be only valid for the terminal(s) that request to transmit the PUSCH based on the transmission of PUSCH repetition, and/or indicate the capability to transmit the PUSCH based on the transmission of PUSCH repetition, and/or request the repetition number of PUSCH transmission. For example, the set of repetition numbers of PUSCH transmission provided in the first information may be $K=\{1, 2, 4, 8\}$; and after the terminal device requests to transmit the PUSCH based on the transmission of PUSCH repetition, and/or indicates the capability to transmit the PUSCH based on the transmission of PUSCH repetition, and/or requests the repetition number of PUSCH transmission, the terminal device may transmit the PUSCH $K1$ times with repetition based on the manner of the transmission of PUSCH repetition. Here, $K1$ may be a value in the set $K$.

The first information may be carried by system information, e.g., SIB1. The first information may also be carried by an RAR message.

Subsequently, the terminal device transmits the second information to the network device for at least one of the following: requesting to transmit the PUSCH based on the transmission of PUSCH repetition; indicating the capability to transmit the PUSCH based on the transmission of PUSCH repetition; or requesting the repetition number of PUSCH transmission.

The second information may be carried by an Msg1. For example, a random access resource associated with the transmission of PUSCH repetition may be selected to initiate a random access procedure. Optionally, the random access resource associated with the transmission of PUSCH repetition may be further associated with the repetition number of PUSCH transmission. If different random access resources are associated with different repetition numbers (e.g., 2, 4, or 8) of PUSCH transmission, the terminal device may select to initiate the random access procedure on a certain random access resource, to request the corresponding repetition number of PUSCH transmission from the network device.

The second information may also be carried by an Msg3, and there may be specific solutions as follows.

In an implementation, the second information may be carried by an MAC CE.

For example, 1 bit in a payload of a first MAC CE may be used to carry the second information. For example, when the bit is set to 1, it may indicate: requesting to transmit the PUSCH based on the transmission of PUSCH repetition, and/or indicating the capability to transmit the PUSCH based on the transmission of PUSCH repetition. Additionally, when the bit is set to 0, it may indicate: not requesting to transmit the PUSCH based on the transmission of PUSCH repetition, and/or not indicating the capability to transmit the PUSCH based on the transmission of PUSCH repetition. Optionally, 2 bits in the payload of the first MAC CE may be used to request the repetition number of PUSCH transmission. For example, bit field values of "00", "01", "10" and "11" may represent the repetition numbers of PUSCH transmission of 2, 4, 8, and not requesting the transmission of PUSCH repetition, respectively.

For another example, the second information may be carried by a second MAC CE. The second MAC CE may correspond to one LCID and have a payload size of 0. If the terminal device transmits the second MAC CE in the Msg3, it may indicate: requesting to transmit the PUSCH based on the transmission of PUSCH repetition, and/or indicating the capability to transmit the PUSCH based on the transmission of PUSCH repetition. If the terminal device does not transmit the second MAC CE in the Msg3, it may indicate: not requesting to transmit the PUSCH based on the transmission of PUSCH repetition, and/or not indicating the capability to transmit the PUSCH based on the transmission of PUSCH repetition. Optionally, a third MAC CE with different LCIDs may be introduced to be associated with different repetition numbers (e.g., 2, 4, or 8) of PDSCH transmission. By transmitting the third MAC CE associated with the repetition number of PUSCH transmission in the Msg3, the terminal device may request the corresponding repetition number of PUSCH transmission from the network device.

For yet another example, the second information may be carried by a second MAC CE and a fourth MAC CE. Each of the second MAC CE and the fourth MAC CE may correspond to one LCID and have a payload size of 0. If the terminal device transmits the second MAC CE in the Msg3, it may indicate: requesting to transmit the PUSCH based on the transmission of PUSCH repetition, and/or indicating the capability to transmit the PUSCH based on the transmission of PUSCH repetition. If the terminal device transmits the fourth MAC CE in the Msg3, it may indicate: not requesting to transmit the PUSCH based on the transmission of PUSCH repetition, and/or not indicating the capability to transmit the PUSCH based on the transmission of PUSCH repetition. Optionally, a third MAC CE with different LCIDs may be introduced to be associated with different repetition numbers (e.g., 2, 4, or 8) of PUSCH transmission. By transmitting the third MAC CE associated with the repetition number of PUSCH transmission in the Msg3, the terminal device may request the corresponding repetition number of PUSCH transmission from the network device.

In another implementation, the second information may be carried by RRC signaling. For example, a first reserved bit field in the existing RRC signaling corresponding to the Msg3 may be used to request to transmit the PUSCH based on the transmission of PUSCH repetition, and/or to indicate the capability to transmit the PUSCH based on the transmission of PUSCH repetition. Optionally, the repetition number of PUSCH transmission may be carried by a second reserved bit field in the RRC signaling. For example, values "00", "01", "10" and "11" of the second reserved bit field may represent the repetition numbers of PUSCH transmission of 2, 4, 8, and not requesting the transmission of PUSCH repetition, respectively.

In another implementation, the second information may be carried by an LCID corresponding to a CCCH. A channel length of the CCCH typically includes 48 bits and 64 bits. Therefore, the CCCH may specifically include a first common control channel CCCH1 (the channel length may be 48 bits) and/or a second common control channel CCCH2 (the channel length may be 64 bits). Here, LCIDs corresponding to the CCCH1 and CCCH2 are unoccupied LCIDs. Subsequently, based on the first transmission manner and the required channel length, the terminal device may determine the corresponding CCCH. When a first condition is met, a CCCH SDU transmitted by the terminal device in the Msg3 may be an SDU corresponding to the CCCH1 or CCCH2. Otherwise, the CCCH SDU transmitted by the terminal device in the Msg3 may be an SDU corresponding to a CCCH3 (an LCID corresponding to the CCCH3 is an occupied LCID). The CCCH SDUs are distinguished by different LCIDs, which are included in MAC sub-headers located before the CCCH SDUs. The first condition may include: requesting to transmit the PUSCH based on the transmission of PUSCH repetition, and/or indicating the capability to transmit the PUSCH based on the transmission of PUSCH repetition. Optionally, the first common control channel CCCH1 or the second common control channel CCCH2 with different LCIDs may be introduced to be associated with different repetition numbers (e.g., 2/4/8) of PDSCH transmission. By transmitting the SDU corresponding to the CCCH1 or CCCH2 associated with the repetition number of PDSCH transmission in the Msg3, the terminal device may request the corresponding repetition number of PDSCH transmission from the network device.

In another implementation, the second information may be carried by a first reserved bit field in an MAC sub-header. For example, when the first reserved bit field is set to 1, it may indicate: requesting to transmit the PUSCH based on the transmission of PUSCH repetition, and/or indicating the capability to transmit the PUSCH based on the transmission of PUSCH repetition. Optionally, the repetition number of PUSCH transmission may be carried by a second reserved bit field in the MAC sub-header. For example, values "00", "01", "10" and "11" of the second reserved bit field may represent the repetition numbers of PUSCH transmission of 2, 4, 8, and not requesting the transmission of PUSCH repetition, respectively.

Finally, if the terminal device applies the set of repetition numbers of PUSCH transmission, the network device may transmit third information to the terminal for determining the repetition number of PDSCH transmission that is ultimately applied to the transmission of PDSCH repetition. For example, after the terminal device requests to transmit the PUSCH based on the transmission of PUSCH repetition and/or indicates the capability to transmit the PUSCH based on the transmission of PUSCH repetition, the network device may further determine the third information based on the set of repetition numbers of PUSCH transmission in the first information or the default set of repetition numbers of PUSCH transmission in the protocol, such as K={1, 2, 4, 8}. When the number of elements included in the set K of repetition numbers of PUSCH transmission provided in the first information or the number of elements included in the default set K of repetition numbers of PUSCH transmission is variable, a bit width P of a bit field required for the third information may be also different. For example, the set K of repetition numbers of PUSCH transmission may be: K={1, 2} including 2 candidate values for the repetition number of PUSCH transmission; K={ 1, 2, 4} including 3 candidate values for the repetition number of PUSCH transmission; or K={1, 2, 4, 8} including 4 candidate values for the repetition number of PUSCH transmission. For example, 1/2/2 bit(s) may be required for K={ 1, 2}/{1, 2, 4}/{1, 2, 4, 8}, respectively.

In order to ensure that the terminal device and the network device have the same understanding of the bit field of the third information, the bit width P of the bit field of the third information may be determined by $P = \lceil \log_2(I) \rceil$. Here, $\lceil * \rceil$ indicates rounding up, and I is the number of candidate values in the set K of repetition numbers of PUSCH transmission or the maximum number of configurable candidate values in the set K of repetition numbers of PUSCH transmission. For example, if I is the number of candidate values in the set K of repetition numbers of PUSCH transmission, the bit widths required for K={1, 2}/{1, 2, 4}/{1, 2, 4, 8} may be P=1/2/2. If I is the maximum number (i.e., 4) of configurable candidate values in the set K of repetition numbers of PUSCH transmission, the bit widths required for K={1, 2}/{1, 2, 4}/{1, 2, 4, 8} may be all P=2.

For example, for the set K={ 1, 2, 4} of repetition numbers of PUSCH transmission, the mapping relationship between the bit field of the third information and the repetition number of PUSCH transmission is shown in Table 4.

Table 4 Mapping relationship between the bit field of the third information and the repetition number of PUSCH transmission

| Bit field | The repetition number of PUSCH transmission |
|---|---|
| 00 | First value in the set K of repetition numbers of PUSCH transmission |
| 01 | Second value in the set K of repetition numbers of PUSCH transmission |
| 10 | Third value in the set K of repetition numbers of PUSCH transmission |
| 11 | |

It should be noted that, considering that a value $2^P$ that can be indicated by the bit filed of the third information may be greater than the number of candidate values in the set K of repetition numbers of PUSCH transmission, in order to ensure that the terminal device and the network device always have the same understanding of the repetition number of PUSCH transmission indicated by the bit field, it is required to be stipulated that: the terminal device does not expect to be indicated a value outside the set K of repetition numbers of PUSCH transmission; or when the terminal is indicated the value outside the set K of repetition numbers of PUSCH transmission, the default repetition number of PUSCH transmission may be applied to the transmission of PUSCH repetition or a single transmission of PUSCH may be transmitted.

For example, the network device may use 2 bits to indicate the repetition number of PUSCH transmission, and provide a set K={1, 2, 4} of repetition numbers of PUSCH transmission. In such case, the value $2^2$=4 that can be indicated by the bit field is greater than the number (i.e., 3) of candidate values in the set K. Therefore, it is required to be stipulated that: when the terminal device requests to transmit the PUSCH based on the transmission of PUSCH repetition from the network device, and/or indicates to the network device the capability to transmit the PUSCH based on the transmission of PUSCH repetition, the terminal device may not expect to be indicated the value outside the K={1, 2, 4}, such as a bit field of "11"; or when the bit field indicates "11", the default repetition number (e.g., 2) of PUSCH transmission may be applied to the transmission of PUSCH repetition, or a single transmission of PUSCH may be transmitted.

Furthermore, optionally, when the terminal device applies one repetition number of PUSCH transmission, the network device may transmit the third information to the terminal device, to enable the terminal device to determine, based on the third information, the repetition number of PUSCH transmission that is ultimately applied to the transmission of PUSCH repetition. For example, after the terminal device requests to transmit the PUSCH based on the transmission of PUSCH repetition and/or indicates the capability to transmit the PUSCH based on the transmission of PUSCH repetition, based on the repetition number of PUSCH transmission in the first information or the repetition number of PUSCH transmission in the second information or the default repetition number of PUSCH transmission in the protocol, such as K=2/4/8, the network device may further determine the third information. For example, when the third information indicates "1", it may indicate to apply K, and when the third information indicates "0", it may indicate not to apply K.

The third information may be carried by DCI, such as the DCI 0_0 for scheduling the PUSCH. The third information may also be carried by RAR.

Embodiment 3: the first transmission manner before the terminal device is configured with the dedicated parameter may include the TBS scaling for PDSCH

Currently, before the terminal device is configured with the dedicated parameter, only some PDSCHs support the TBS scaling, which include the PDSCHs scheduled by DCI 1_0 with CRC scrambled by P-RNTI, RA-RNTI, or MsgB-RNTI; and the TBS can be reduced to at most 1/4 of the original. As such, the improvement in the coverage performance is limited. Therefore, in the embodiments of the present disclosure, before the terminal device is configured with the dedicated parameter, there is at least one PDSCH supporting the TBS scaling (e.g., Msg4 PDSCH), or supporting a smaller TBS scaling factor (e.g., Msg2 PDSCH), thereby further improving the downlink coverage performance.

A process of transmission of PDSCH repetition before the terminal device is configured with the dedicated parameter in the embodiments of the present disclosure is shown in FIG. 15, which is applied to a wireless communication system including a terminal device and a network device. The method includes the following operations S1501 to S1503.

At block S1501, a network device transmits first information to a terminal device. The first information is used for at least one of the following: indicating that the network device supports to transmit a PDSCH based on TBS scaling for PDSCH before the terminal device is configured with a dedicated parameter, or a parameter for the TBS scaling for PDSCH.

At block S1502, the terminal device transmits second information to the network device. The second information is used for at least one of the following:

requesting to receive the PDSCH based on the TBS scaling for PDSCH;
indicating a capability to receive the PDSCH based on the TBS scaling for PDSCH; or
requesting a TBS scaling factor for PDSCH.

At block S1503, the network device transmits third information to the terminal device. The third information is used to determine a target TBS scaling factor for PDSCH.

In the embodiments of the present disclosure, the network device transmits the first information to the terminal device. In a case where the first information indicates that the network device supports to transmit the PDSCH based on the TBS scaling for PDSCH for coverage enhancement before the terminal device is configured with the dedicated parameter, the downlink coverage performance before the terminal device is configured with the dedicated parameter can be improved, thereby avoiding the situation where the terminal device is unable to access the network.

Firstly, the network device transmits the first information to the terminal device for indicating that the network device supports to transmit the PDSCH based on the TBS scaling for PDSCH before the terminal device is configured with the dedicated parameter.

For example, when a first parameter is included in the first information, or the first parameter is included in the first information and is configured as "enabled", it may represent that the network device supports to transmit the PDSCH based on the TBS scaling for PDSCH before the terminal device is configured with the dedicated parameter.

In some embodiments, the first information may further include a second parameter, and the second parameter may be a parameter for the transmission of PDSCH repetition.

In some embodiments, the second parameter may include at least one of the following: a random access resource associated with the TBS scaling for PDSCH, an RSRP threshold corresponding to the TBS scaling for PDSCH, a TBS scaling factor for PDSCH, or a set of TBS scaling factors for PDSCH.

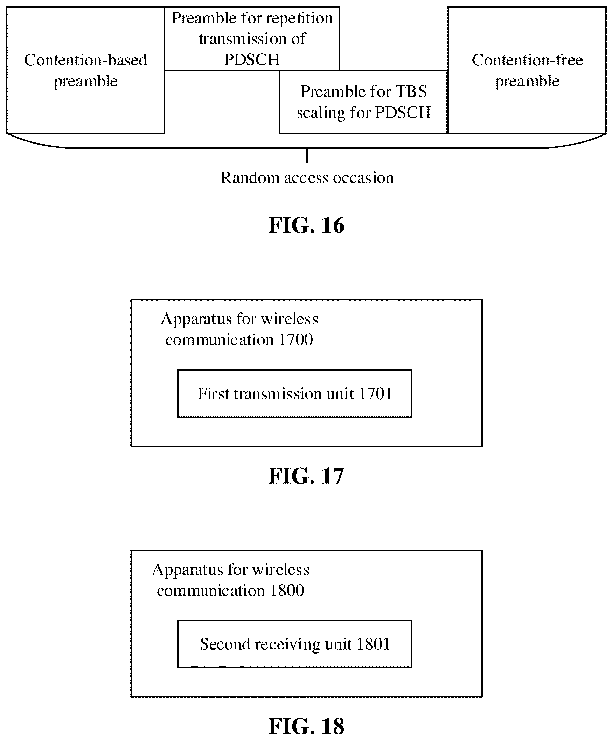

In the embodiments of the present disclosure, the random access resource may be used for the terminal device to perform a random access procedure. For example, on a basis of a contention-based PRACH preamble and a contention-free PRACH preamble provided in a random access occasion, the first information may respectively provide a preamble for the transmission of PDSCH repetition and a PRACH preamble for the TBS scaling for PDSCH (as shown in FIG. 16). When the PRACH preamble selected by the terminal device is only associated with the TBS scaling for PDSCH, it may indicate that the terminal device only requests to the network device for receiving the PDSCH based on the TBS scaling for PDSCH and/or indicates to the network device the capability to receive the PDSCH based on the TBS scaling for PDSCH. When the PRACH preambles selected by the terminal device are associated with both the TBS scaling for PDSCH and the transmission of PDSCH repetition, it may indicate that the terminal device simultaneously requests to the network device for receiving the PDSCH based on the TBS scaling for PDSCH and/or indicates to the network device the capability to receive the PDSCH based on the TBS scaling for PDSCH, as well as requests to the network device for receiving the PDSCH based on the transmission of PDSCH repetition and/or indicates to the network device the capability to receive the PDSCH based on the transmission of PDSCH repetition.

In the embodiments of the present disclosure, based on the RSRP threshold corresponding to the TBS scaling for PDSCH, the terminal device may determine whether to request to receive the PDSCH based on the TBS scaling for PDSCH, and/or to indicate the capability to receive the PDSCH based on the TBS scaling for PDSCH, and/or to request the TBS scaling factor for PDSCH. For example, when the RSRP threshold corresponding to the TBS scaling for PDSCH is -126 dBm, if an RSRP measured by the terminal device is lower than the RSRP threshold (-126 dBm), the terminal device may initiate the random access procedure through a random access resource associated with the TBS scaling for PDSCH. That is, the terminal device may request to the network device for receiving the PDSCH based on the TBS scaling for PDSCH, and/or indicate to the network device the capability to receive the PDSCH based on the TBS scaling for PDSCH, and/or request to the network device for the TBS scaling factor for PDSCH.

In the embodiments of the present disclosure, the TBS scaling factor for PDSCH may be carried in the first information, or may be agreed in a protocol (i.e., default) between the network device and the terminal device. Regarding the TBS scaling factor for PDSCH, it may be only valid for the terminal(s) that request to receive the PDSCH based on the TBS scaling for PDSCH, and/or indicate the capability to receive the PDSCH based on the TBS scaling for PDSCH, and/or request the TBS scaling factor for PDSCH. For example, the TBS scaling factor for PDSCH provided in the first information may be S=1, 0.5, 0.25, or 0.125; and after the terminal device requests to receive the PDSCH based on the TBS scaling for PDSCH, and/or indicates the capability to receive the PDSCH based on the TBS scaling for PDSCH, and/or requests the TBS scaling factor for PDSCH, the terminal device may apply the TBS scaling factor S for PDSCH based on the manner of the TBS scaling for PDSCH.

In the embodiments of the present disclosure, the set of TBS scaling factors for PDSCH may be carried in the first information, or may be agreed in a protocol (i.e., default) between the network device and the terminal device. Regarding the set of TBS scaling factors for PDSCH, it may be only valid for the terminal(s) that request to receive the PDSCH based on the TBS scaling for PDSCH, and/or indicate the capability to receive the PDSCH based on the TBS scaling for PDSCH, and/or request the TBS scaling factor for PDSCH. For example, the TBS scaling factor for PDSCH provided in the first information may be S={1, 0.5, 0.25, 0.125}; and after the terminal device requests to receive the PDSCH based on the TBS scaling for PDSCH, and/or indicates the capability to receive the PDSCH based on the TBS scaling for PDSCH, and/or requests the TBS scaling factor for PDSCH, the terminal device may apply a scaling factor S1 for PDSCH based on the manner of the TBS scaling for PDSCH. Here, S1 may be a value in the set S.

The first information may be carried by system information, e.g., SIB1. The first information may also be carried by an RAR message.

Subsequently, the terminal device transmits the second information to the network device for at least one of the following: requesting to receive the PDSCH based on the TBS scaling for PDSCH; indicating the capability to receive the PDSCH based on the TBS scaling for PDSCH; or requesting the TBS scaling factor for PDSCH.

The second information may be carried by an Msg1. For example, a random access resource associated with the TBS scaling for PDSCH may be selected to initiate a random access procedure. Optionally, the random access resource associated with the TBS scaling for PDSCH may be further associated with the TBS scaling factor for PDSCH. If different random access resources are associated with different TBS scaling factors (e.g., 1, 0.5, 0.25, or 0.125) for PDSCH, the terminal device may select to initiate the random access procedure on a certain random access resource, to request the corresponding TBS scaling factor for PDSCH from the network device.

The second information may also be carried by an Msg3, and there may be specific solutions as follows.

In an implementation, the second information may be carried by an MAC CE.

For example, 1 bit in a payload of a first MAC CE may be used to carry the second information. For example, when the bit is set to 1, it may indicate: requesting to receive the PDSCH based on the TBS scaling for PDSCH, and/or indicating the capability to receive the PDSCH based on the TBS scaling for PDSCH. Additionally, when the bit is set to 0, it may indicate: not requesting to receive the PDSCH based on the TBS scaling for PDSCH, and/or not indicating the capability to receive the PDSCH based on the TBS scaling for PDSCH. Optionally, 2 bits in the payload of the first MAC CE may be used to request the TBS scaling factor for PDSCH. For example, bit field values of "00", "01", "10" and "11" may represent the TBS scaling factors for PDSCH of 1, 0.5, 0.25 and 0.125, respectively.

For another example, the second information may be carried by a second MAC CE. The second MAC CE may correspond to one LCID and have a payload size of 0. If the terminal device transmits the second MAC CE in the Msg3, it may indicate: requesting to receive the PDSCH based on the TBS scaling for PDSCH, and/or indicating the capability to receive the PDSCH based on the TBS scaling for PDSCH. If the terminal device does not transmit the second MAC CE in the Msg3, it may indicate: not requesting to receive the PDSCH based on the TBS scaling for PDSCH, and/or not indicating the capability to receive the PDSCH based on the TBS scaling for PDSCH. Optionally, a third MAC CE with different LCIDs may be introduced to be associated with different TBS scaling factors (e.g., 1, 0.5, 0.25, or 0.125) for PDSCH. By transmitting the third MAC CE associated with the TBS scaling factor for PDSCH in the Msg3, the terminal device may request the corresponding TBS scaling factor for PDSCH from the network device.

For yet another example, the second information may be carried by a second MAC CE and a fourth MAC CE. Each of the second MAC CE and the fourth MAC CE may correspond to one LCID and have a payload size of 0. If the terminal device transmits the second MAC CE in the Msg3, it may indicate: requesting to receive the PDSCH based on the TBS scaling for PDSCH, and/or indicating the capability to receive the PDSCH based on the TBS scaling for PDSCH. If the terminal device transmits the fourth MAC CE in the Msg3, it may indicate: not requesting to receive the PDSCH based on the TBS scaling for PDSCH, and/or not indicating the capability to receive the PDSCH based on the TBS scaling for PDSCH. Optionally, a third MAC CE with different LCIDs may be introduced to be associated with different TBS scaling factors (e.g., 1, 0.5, 0.25, or 0.125) for PDSCH. By transmitting the third MAC CE associated with the TBS scaling factor for PDSCH in the Msg3, the terminal device may request the corresponding TBS scaling factor for PDSCH from the network device.

In another implementation, the second information may be carried by RRC signaling. For example, a first reserved bit field in the existing RRC signaling corresponding to the Msg3 may be used to request to receive the PDSCH based on the TBS scaling for PDSCH, and/or to indicate the capability to receive the PDSCH based on the TBS scaling for PDSCH. Optionally, the repetition number of PDSCH transmission may be carried by a second reserved bit field in the RRC signaling. For example, values "00", "01", "10" and "11" of the second reserved bit field may represent the TBS scaling factors for PDSCH of 1, 0.5, 0.25 and 0.125, respectively.

In another implementation, the second information may be carried by an LCID corresponding to a CCCH. A channel length of the CCCH typically includes 48 bits and 64 bits. Therefore, the CCCH may specifically include a first common control channel CCCH1 (the channel length may be 48 bits) and/or a second common control channel CCCH2 (the channel length may be 64 bits). Here, LCIDs corresponding to the CCCH1 and CCCH2 are unoccupied LCIDs. Subsequently, based on the first transmission manner and the required channel length, the terminal device may determine the corresponding CCCH. When a first condition is met, a CCCH SDU transmitted by the terminal device in the Msg3 may be an SDU corresponding to the CCCH1 or CCCH2. Otherwise, the CCCH SDU transmitted by the terminal device in the Msg3 may be an SDU corresponding to a CCCH3 (an LCID corresponding to the CCCH3 is an occupied LCID). The CCCH SDUs are distinguished by different LCIDs, which are included in MAC sub-headers located before the CCCH SDUs. The first condition may include: requesting to receive the PDSCH based on the TBS scaling for PDSCH, and/or indicating the capability to receive the PDSCH based on the TBS scaling for PDSCH. Optionally, the first common control channel CCCH1 or the second common control channel CCCH2 with different LCIDs may be introduced to be associated with different repetition numbers (e.g., 2/4/8) of PDSCH transmission. By transmitting the SDU corresponding to the CCCH1 or CCCH2 associated with the repetition number of PDSCH transmission in the Msg3, the terminal device may request the corresponding repetition number of PDSCH transmission from the network device.

In another implementation, the second information may be carried by a first reserved bit field in an MAC sub-header. For example, when the first reserved bit field is set to 1, it may indicate: requesting to receive the PDSCH based on the TBS scaling for PDSCH, and/or indicating the capability to receive the PDSCH based on the TBS scaling for PDSCH. Optionally, the repetition number of PDSCH transmission may be carried by a second reserved bit field in the MAC sub-header. For example, values "00", "01", "10" and "11" of the second reserved bit field may represent the TBS scaling factors for PDSCH of 1, 0.5, 0.25 and 0.125, respectively.

Finally, if the terminal device applies the set of TBS scaling factors for PDSCH, the network device may transmit third information to the terminal device for determining the TBS scaling factor for PDSCH that is ultimately applied to the TBS scaling for PDSCH. For example, after the terminal device requests to receive the PDSCH based on the TBS scaling for PDSCH and/or indicates the capability to receive the PDSCH based on the TBS scaling for PDSCH, the network device may further determine the third information based on the set of TBS scaling factors for PDSCH provided in the first information or the default set of TBS scaling factors for PDSCH in the protocol, such as S={ 1, 0.5, 0.25, 0.125}.

When the number of elements included in the set S of TBS scaling factors for PDSCH provided in the first information or the number of elements included in the default set S of TBS scaling factors for PDSCH is variable, a bit width P of a bit field required for the third information may be also different. In order to ensure that the terminal device and the network device have the same understanding of the bit field of the third information, the bit width P of the bit field of the third information may be determined by $P = \lceil \log_2(I) \rceil$. Here, $\lceil * \rceil$ indicates rounding up, and I is the number of candidate values in the set S of TBS scaling factors for PDSCH or the maximum number of configurable candidate values in the set S of TBS scaling factors for PDSCH.

For example, for the set S={1, 0.5, 0.25} of TBS scaling factors for PDSCH, the mapping relationship between the bit field of the third information and the TBS scaling factor for PDSCH is shown in Table 5.

Table 5 Mapping relationship between the bit field of the third information and the TBS scaling factor for PDSCH

| Bit field | TBS scaling factor for PDSCH |
|-----------|------------------------------|
| 00 | First value in the set K of TBS scaling factors for PDSCH |
| 01 | Second value in the set K of TBS scaling factors for PDSCH |
| 10 | Third value in the set K of TBS scaling factors for PDSCH |
| 11 | |

It should be noted that, considering that a value $2^P$ that can be indicated by the bit filed of the third information may be greater than the number of candidate values in the set S of TBS scaling factors for PDSCH, in order to ensure that the terminal device and the network device always have the same understanding of the TBS scaling factor for PDSCH indicated by the bit field, it is required to be stipulated that: the terminal does not expect to be indicated a value outside the set S of TBS scaling factors for PDSCH, or when the terminal is indicated the value outside the set S of TBS scaling factors for PDSCH, the default TBS scaling factor for PDSCH may be applied to the TBS scaling for PDSCH or the transmission of PDSCH whose TBS is not scaled may be received.

For example, the network device may use 2 bits to indicate the TBS scaling factor for PDSCH, and provide a set S={ 1, 0.5, 0.25} of TBS scaling factors for PDSCH. In such case, the value $2^2=4$ that can be indicated by the bit field is greater than the number (i.e., 3) of candidate values in the set S. Therefore, it is required to be stipulated that: when the terminal device requests to the network device for receiving the PDSCH based on the TBS scaling for PDSCH, and/or indicates to the network device the capability to receive the PDSCH based on the TBS scaling for PDSCH, the terminal device may not expect to be indicated the value outside the S={1, 0.5, 0.25}, such as a bit field of "11"; or when the bit field indicates "11", the default TBS scaling factor (e.g., 2) for PDSCH may be applied to the TBS scaling for PDSCH, or the transmission of PDSCH whose TBS is not scaled may be received.

Furthermore, optionally, when the terminal device applies one TBS scaling factor for PDSCH, the network device may transmit the third information to the terminal device, to enable the terminal device to determine, based on the third information, the TBS scaling factor for PDSCH that is ultimately applied to the TBS scaling for PDSCH. For example, after the terminal device requests to receive the PDSCH based on the TBS scaling for PDSCH and/or indicates the capability to receive the PDSCH based on the TBS scaling for PDSCH, based on the TBS scaling factor for PDSCH provided by the network device in the first information or the second information or the default TBS scaling factor for PDSCH in the protocol, such as S=0.5/0.25/0.125, the terminal device may need to further receive the third information to determine whether to apply the TBS scaling factor for PDSCH ultimately. For example, when the third information indicates "1", it may indicate to apply S, and when the third information indicates "0", it may indicate not to apply S.

The third information may be carried by DCI, such as DCI 1_0 for scheduling the PDSCH. The third information may also be carried by an RAR message.

The method for wireless communication according to the embodiments of the present disclosure provides the solutions for coverage enhancement before the terminal device is configured with the dedicated parameter, which may be implemented as the following.

1) The network device transmits the first information, to enable the terminal device to know whether the network device supports the transmission of PDSCH repetition, the TBS scaling for PDSCH and the transmission of PUSCH repetition, and to further know related information such as the repetition number of transmission and the TBS scaling factor.

2) The terminal device transmits the second information, to enable the network device to know whether the terminal device has the need or capability for the coverage enhancement, thereby enabling the network device to perform reasonable resource scheduling.

3) The network device transmits the third information, which is used for determining the repetition number of PDSCH transmission/PUSCH, the TBS scaling factor for PDSCH that are ultimately applied. As such, it can be ensured that the network device and the terminal device have the same understanding of the repetition number of transmission and the TBS scaling factor.

The method for wireless communication according to the embodiments of the present disclosure is applicable to any system that applies the solutions for coverage enhancement, such as an NTN system.

The preferred implementations of the present disclosure are described in detail above with reference to the accompanying drawings. However, the present disclosure is not limited to the specific details in the aforementioned implementations. Within the scope of the technical conception of the present disclosure, a variety of simple modifications may be made to the technical solutions of the present disclosure, and such simple modifications shall fall within the scope of protection of the present disclosure. For example, various specific technical features described in the above specific implementations may be combined in any appropriate way without contradiction. In order to avoid unnecessary repetition, the present disclosure does not further elaborate on various possible combinations. For another example, any combination may be made between various implementations of the present disclosure, as long as the combinations do not contradict the idea of the present disclosure, and the combinations shall also be regarded as the contents of the present disclosure. For yet another example, under the premise of no conflict, various embodiments and/or technical features in the various embodiments described in the present disclosure may be combined with the related art in any manner. The technical solutions acquired after such combinations shall also fall within the scope of protection of the present disclosure.

It should be further understood that, in the various method embodiments of the present disclosure, the size of sequence number if the aforementioned processes does not imply the order of execution. The order of execution of each of the processes should be determined based on functions and inherent logic thereof, and shall not constitute any limitation on the implementation processes in the embodiments of the present disclosure. Furthermore, in the embodiments of the present disclosure, terms "downlink", "uplink" and "sidelink" are used to indicate a transmission direction of a signal or data. Herein, the term "downlink" is used to indicate that the transmission direction of the signal or data is a first direction transmitted from a station to a user device in a cell; the term "uplink" is used to indicate that the transmission direction of the signal or data is a second direction transmitted from the user device in the cell to the station; and the term "sidelink" is used to indicate that the transmission direction of the signal or data is a third direction transmitted from a user device 1 to a user device 2. For example, a "downlink signal" indicates that the transmission direction of the signal is the first direction. Furthermore, in the embodiments of the present disclosure, a term "and/or" is only used to indicate an association relationship for describing associated objects, and indicates that three kinds of relationships may exist. Specifically, "A and/or B" may indicate three cases, i.e., independent existence of A, existence of both A and B, and independent existence of B. Moreover, a character "/" in the present disclosure generally indicates that preceding and following associated objects form an "or" relationship.

FIG. 17 is a schematic diagram of a structural composition of an apparatus for wireless communication according to an embodiment of the present disclosure, which is applied to a network device. As shown in FIG. 17, the apparatus for wireless communication 1700 includes a first transmission unit 1701.

The first transmission unit 1701 is configured to transmit, through the network device, first information to a terminal device. The first information is used to indicate whether the network device supports to receive or transmit a first transmission based on a first transmission manner before the terminal device is configured with a dedicated parameter, and the first transmission manner is used for coverage enhancement.

In some embodiments, the first transmission manner may include at least one of the following:

transmission of physical downlink shared channel (PDSCH) repetition;
transport block size (TBS) scaling for PDSCH; or
transmission of physical uplink shared channel (PUSCH) repetition.

In some embodiments, the first transmission may include at least one of the following:

a transmission during a random access procedure; or
a transmission after the random access procedure and before the terminal device is configured with the dedicated parameter.

In some embodiments, the first information may be carried by one of the following:

system information; or
a random access response (RAR) message.

In some embodiments, the first information may include a first parameter, and the first parameter may be used to indicate whether the network device supports to receive or transmit the first transmission based on the first transmission manner before the terminal device is configured with the dedicated parameter.

In some embodiments, the first information may include a second parameter, and the second parameter may be a parameter for the first transmission manner.

In some embodiments, when the first transmission manner includes the transmission of PDSCH repetition, the second parameter may include at least one of the following: a random access resource associated with the transmission of PDSCH repetition, a reference signal received power (RSRP) threshold corresponding to the transmission of PDSCH repetition, a repetition number of PDSCH transmission, or a set of repetition numbers of PDSCH transmission.

In some embodiments, when the first transmission manner includes the TBS scaling for PDSCH, the second parameter may include at least one of the following: a random access resource associated with the TBS scaling for PDSCH, an RSRP threshold corresponding to the TBS scaling for PDSCH, a TBS scaling factor for PDSCH, or a set of TBS scaling factors for PDSCH.

In some embodiments, when the first transmission manner includes the transmission of PUSCH repetition, the second parameter may include at least one of the following: a random access resource associated with the transmission of PUSCH repetition, an RSRP threshold corresponding to the transmission of PUSCH repetition, a repetition number of PUSCH transmission, or a set of repetition numbers of PUSCH transmission.

In some embodiments, a first receiving unit may be further included. The first receiving unit may be configured to receive, through the network device, second information from the terminal device. The second information may be used for at least one of the following:

requesting to receive or transmit the first transmission based on the first transmission manner;
indicating a capability to receive or transmit the first transmission based on the first transmission manner; or
requesting a transmission factor, where the transmission factor includes a repetition number of transmission and/or a scaling factor.

In some embodiments, the second information may be carried by one of the following:

a message 1 (Msg1); or
a message 3 (Msg3).

In some embodiments, the second information may be included in one of the following in the Msg3:

a media access control (MAC) control element (CE);
radio resource control (RRC) signaling;
a logical channel identification (LCID) corresponding to a common control channel (CCCH); or
a reserved bit in a MAC sub-header.

In some embodiments, the first transmission unit 1701 may be further configured to transmit, through the network device, third information to the terminal device. The third information may be used to determine a target transmission factor, and the target transmission factor may be a transmission factor applied in the first transmission manner.

In some embodiments, the target transmission factor may be one of the following:

a first transmission factor, where the first transmission factor is a transmission factor in a first transmission factor set;
a second transmission factor, where the second transmission factor is a default transmission factor; or
a third transmission factor, where the third transmission factor is a transmission factor carried in the first information or second information.

In some embodiments, the first transmission factor set may be one of the following:

a transmission factor set carried in the first information; or
a default transmission factor set.

In some embodiments, when the third information is used to indicate the first transmission factor, the target transmission factor may be the first transmission factor.

In some embodiments, when the third information is used to indicate a value outside the first transmission factor set, the target transmission factor may be the second transmission factor, or the first transmission manner may not be used for the first transmission.

In some embodiments, the terminal device does not expect the third information to indicate the value outside the first transmission factor set.

In some embodiments, the third information may be used to indicate whether the second transmission factor or the third transmission factor is applied in the first transmission manner.

In some embodiments, when the third information is used to indicate that the second transmission factor or the third transmission factor is applied in the first transmission manner, the target transmission factor may be the second transmission factor or the third transmission factor.

In some embodiments, when the third information is used to indicate that the second transmission factor or the third transmission factor is not applied in the first transmission manner, the first transmission manner may not be used for the first transmission.

In some embodiments, the third information may be carried by one of the following:

downlink control information (DCI); or

a random access response (RAR) message.

In some embodiments, when the first transmission manner includes the transmission of PDSCH repetition, the transmission factor may include a repetition number of PDSCH transmission.

When the first transmission manner includes the TBS scaling for PDSCH, the transmission factor may include a TBS scaling factor.

When the first transmission manner includes the transmission of PUSCH repetition, the transmission factor may include a repetition number of PUSCH transmission.

FIG. 18 is a schematic diagram of a structural composition of an apparatus for wireless communication according to an embodiment of the present disclosure, which is applied to a terminal device. As shown in FIG. 18, the apparatus for wireless communication 1800 includes a second receiving unit 1801.

The second receiving unit 1801 is configured to receive, through the terminal device, first information from a network device. The first information is used to indicate whether the network device supports to receive or transmit a first transmission based on a first transmission manner before the terminal device is configured with a dedicated parameter, and the first transmission manner is used for coverage enhancement.

In some embodiments, the first transmission manner may include at least one of the following:

transmission of physical downlink shared channel (PDSCH) repetition;

transport block size (TBS) scaling for PDSCH; or

transmission of physical uplink shared channel (PUSCH) repetition.

In some embodiments, the first transmission may include at least one of the following:

a transmission during a random access procedure; or

a transmission after the random access procedure and before the terminal device is configured with the dedicated parameter.

In some embodiments, the first information may be carried by one of the following:

system information; or

a random access response (RAR) message.

In some embodiments, the first information may include a first parameter, and the first parameter may be used to indicate whether the network device supports to receive or transmit the first transmission based on the first transmission manner before the terminal device is configured with the dedicated parameter.

In some embodiments, the first information may include a second parameter, and the second parameter may be a parameter for the first transmission manner.

In some embodiments, when the first transmission manner includes the transmission of PDSCH repetition, the second parameter may include at least one of the following: a random access resource associated with the transmission of PDSCH repetition, a reference signal received power (RSRP) threshold corresponding to the transmission of PDSCH repetition, a repetition number of PDSCH transmission, or a set of repetition numbers of PDSCH transmission.

In some embodiments, when the first transmission manner includes the TBS scaling for PDSCH, the second parameter may include at least one of the following: a random access resource associated with the TBS scaling for PDSCH, an RSRP threshold corresponding to the TBS scaling for PDSCH, a TBS scaling factor for PDSCH, or a set of TBS scaling factors for PDSCH.

In some embodiments, when the first transmission manner includes the transmission of PUSCH repetition, the second parameter may include at least one of the following: a random access resource associated with the transmission of PUSCH repetition, an RSRP threshold corresponding to the transmission of PUSCH repetition, a repetition number of PUSCH transmission, or a set of repetition numbers of PUSCH transmission.

In some embodiments, a second transmission unit may be further included. The second transmission unit may be configured to transmit, through the terminal device, second information to the network device. The second information may be used for at least one of the following:

requesting to receive or transmit the first transmission based on the first transmission manner;

indicating a capability to receive or transmit the first transmission based on the first transmission manner; or

requesting a transmission factor, where the transmission factor includes a repetition number of transmission and/or a scaling factor.

In some embodiments, the second information may be carried by one of the following:

a message 1 (Msg1); or
a message 3 (Msg3).

In some embodiments, the second information may be included in one of the following in the Msg3:

a media access control (MAC) control element (CE);
radio resource control (RRC) signaling;
a logical channel identification (LCID) corresponding to a common control channel (CCCH); or
a reserved bit in a MAC sub-header.

In some embodiments, the second receiving unit 1801 may be further configured to receive, through the terminal device, third information from the network device. The third information may be used to determine a target transmission factor, and the target transmission factor may be a transmission factor applied in the first transmission manner.

In some embodiments, the target transmission factor may be one of the following:

a first transmission factor, where the first transmission factor is a transmission factor in a first transmission factor set;
a second transmission factor, where the second transmission factor is a default transmission factor; or
a third transmission factor, where the third transmission factor is a transmission factor carried in the first information or second information.

In some embodiments, the first transmission factor set may be one of the following:

a transmission factor set carried in the first information; or
a default transmission factor set.

In some embodiments, when the third information is used to indicate the first transmission factor, the target transmission factor may be the first transmission factor.

In some embodiments, when the third information is used to indicate a value outside the first transmission factor set, the target transmission factor may be the second transmission factor, or the first transmission manner may not be used for the first transmission.

In some embodiments, the terminal device does not expect the third information to indicate the value outside the first transmission factor set.

In some embodiments, the third information may be used to indicate whether the second transmission factor or the third transmission factor is applied in the first transmission manner.

In some embodiments, when the third information is used to indicate that the second transmission factor or the third transmission factor is applied in the first transmission manner, the target transmission factor may be the second transmission factor or the third transmission factor.

In some embodiments, when the third information is used to indicate that the second transmission factor or the third transmission factor is not applied in the first transmission manner, the first transmission manner may not be used for the first transmission.

In some embodiments, the third information may be carried by one of the following:

downlink control information (DCI); or
a random access response (RAR) message.

In some embodiments, when the first transmission manner includes the transmission of PDSCH repetition, the transmission factor may include a repetition number of PDSCH transmission;
When the first transmission manner includes the TBS scaling for PDSCH, the transmission factor may include a TBS scaling factor.

When the first transmission manner includes the transmission of PUSCH repetition, the transmission factor may include a repetition number of PUSCH transmission.

It should be understood by those skilled in the art that the related description of the above apparatus for wireless communication in the embodiments of the present disclosure may be understood with reference to the related description of the method for wireless communication in the embodiments of the present disclosure.

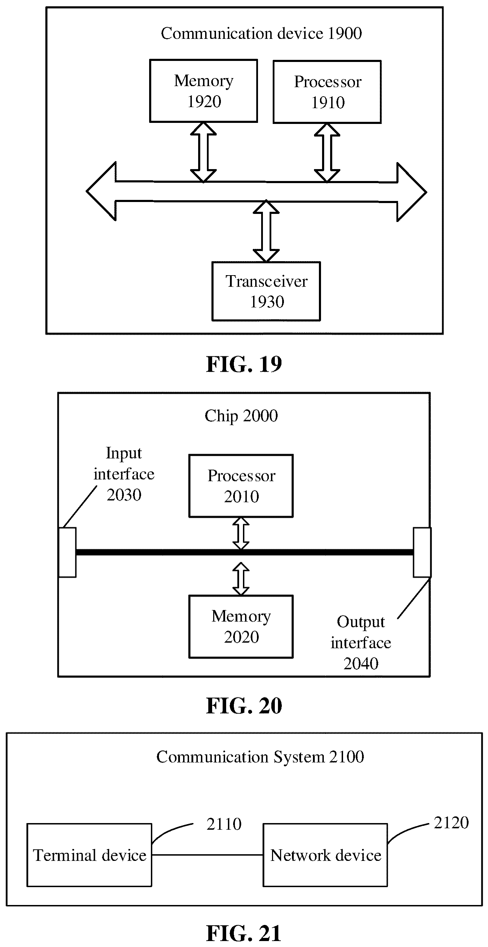

FIG. 19 is a schematic structural diagram of a communication device 1900 according to an embodiment of the present disclosure. The communication device may be a terminal device or a network device. The communication device 1900 shown in FIG. 19 includes a processor 1910, which may call and run a computer program from a memory to implement the method in the embodiments of the present disclosure.

Optionally, as shown in FIG. 19, the communication device 1900 may further include a memory 1920. Herein the processor 1910 may call and run a computer program from the memory 1920 to implement the method in the embodiments of the present disclosure.

Herein the memory 1920 may be a separate device independent of the processor 1910, or may be integrated in the processor 1910.

Optionally, as shown in FIG. 19, the communication device 1900 may further include a transceiver 1930, and the processor 1910 may control the transceiver 1930 to communicate with other devices. Specifically, the transceiver 1930 may transmit information or data to other devices, or may receive information or data from other devices.

Herein, the transceiver 1930 may include a transmitter and a receiver. The transceiver 1930 may further include one or more antennas.

Optionally, the communication device 1900 may specifically be the network device in the embodiments of the present disclosure, and the communication device 1900 may implement the corresponding process implemented by the network device in each of the methods in the embodiments of the present disclosure, which are not repeated herein for the sake of brevity.

Optionally, the communication device 1900 may specifically be the mobile terminal/terminal device in the embodiments of the present disclosure, and the communication device 1900 may implement the corresponding process implemented by the mobile terminal/terminal device in each of the methods in the embodiments of the present disclosure, which are not repeated herein for the sake of brevity.

FIG. 20 is a schematic structural diagram of a chip according to an embodiment of the present disclosure. The chip 2000 shown in FIG. 20 includes a processor 2010, which may call and run a computer program from a memory to implement the method in the embodiments of the present disclosure.

Optionally, as shown in FIG. 20, the chip 2000 may further include a memory 2020. The processor 2010 may call and run a computer program from the memory 2020 to implement the method in the embodiments of the present disclosure.

Herein, the memory 2020 may be a separate device independent of the processor 2010, or may be integrated in the processor 2010.

Optionally, the chip 2000 may further include an input interface 2030. The processor 2010 may control the input interface 2030 to communicate with other devices or chips. Specifically, the input interface 2030 may acquire information or data from other devices or chips.

Optionally, the chip 2000 may further include an output interface 2040. The processor 2010 may control the output interface 2040 to communicate with other devices or chips. Specifically, the output interface 2040 may output information or data to other devices or chips.

Optionally, the chip may be applied to the network device in the embodiments of the present disclosure, and the chip may implement the corresponding process implemented by the network device in each of the methods in the embodiments of the present disclosure, which are not repeated herein for the sake of brevity.

Optionally, the chip may be applied to the mobile terminal/terminal device in the embodiments of the present disclosure, and the chip may implement the corresponding process implemented by the mobile terminal/terminal device in each of the methods in the embodiments of the present disclosure, which are not repeated herein for the sake of brevity.

It should be understood that the aforementioned chip in the embodiments of the present disclosure may also be referred to as a system level chip, a system chip, a chip system, or a system on chip, etc.

FIG. 21 is a schematic block diagram of a communication system 2100 according to an embodiment of the present disclosure. As shown in FIG. 21, the communication system 2100 includes a terminal device 2110 and a network device 2120.

Herein the terminal device 2110 may be configured to implement the corresponding functions implemented by the terminal device in the above methods, and the network device 2120 may be configured to implement the corresponding functions implemented by the network device in the above methods, which are not repeated herein for the sake of brevity.

It should be understood that the processor in the embodiments of the present disclosure may be an integrated circuit chip having signal processing capability. During the implementation process, each operation of the above method embodiments may be accomplished by an integrated logic circuit of hardware or by an instruction in form of software in the processor. The above processor may be a general purpose processor, a Digital Signal Processor (DSP), an Application Specific Integrated Circuit (ASIC), a Field Programmable Gate Array (FPGA), or other programmable logic device, discrete gate or transistor logic device, discrete hardware component. The processor may implement or perform the methods, operations, and logical block diagrams disclosed in the embodiments of the present disclosure. The general purpose processor may be a microprocessor or any conventional processor or the like. The operations of the methods disclosed in the embodiments of the present disclosure may be directly accomplished by the hardware decoding processor, or be accomplished by a combination of hardware and software modules in the decoding processor. The software module may be located in a Random Access Memory (RAM), a flash memory, a Read-Only Memory (ROM), a Programmable ROM (PROM) or an electrically erasable programmable memory, a register and other storage medium mature in the art. The storage medium is located in the memory, and the processor reads information in the memory to implement the operations of each of the methods above in combination with the hardware.

It may be understood that the memory in the embodiments of the present disclosure may be a transitory memory or a non-transitory memory, or may include both the transitory memory and the non-transitory memory. The non-transitory memory may be a ROM, a PROM, an Erasable PROM (EPROM), an Electrically EPROM (EEPROM), or a flash memory. The transitory memory may be a RAM that used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories are examples but not limiting descriptions. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include, but is not limited to, these and any other suitable types of memories.

According to an embodiment of the present disclosure, a computer-readable storage medium is further provided. The computer-readable storage medium is configured to store a computer program.

Optionally, the computer-readable storage medium may be applied to the network device in the embodiments of the present disclosure, and the computer program enables a computer to execute the corresponding process implemented by the network device in each of the methods in the embodiments of the present disclosure, which are not repeated herein for the sake of brevity.

Optionally, the computer-readable storage medium may be applied to the mobile terminal/terminal device in the embodiments of the present disclosure, and the computer program enables a computer to execute the corresponding process implemented by the mobile terminal/terminal device in each of the methods in the embodiments of the present disclosure, which are not repeated herein for the sake of brevity.

According to an embodiment of the present disclosure, a computer program product is further provided. The computer program product includes a computer program instruction.

Optionally, the computer program product may be applied to the network device in the embodiments of the present disclosure, and the computer program instruction enables a computer to execute the corresponding process implemented by the network device in each of the methods in the embodiments of the present disclosure, which are not repeated herein for the sake of brevity.

Optionally, the computer program product may be applied to the mobile terminal/terminal device in the embodiments of the present disclosure, and the computer program instruction enables a computer to execute the corresponding process implemented by the mobile terminal/terminal device in each of the methods in the embodiments of the present disclosure, which are not repeated herein for the sake of brevity.

According to an embodiment of the present disclosure, a computer program is further provided.

Optionally, the computer program may be applied to the network device in the embodiments of the present disclosure, and the computer program, when run on a computer, enables the computer to execute the corresponding process implemented by the network device in each of the methods in the embodiments of the present disclosure, which are not repeated herein for the sake of brevity.

Optionally, the computer program may be applied to the mobile terminal/terminal device in the embodiments of the present disclosure, and the computer program, when run on a computer, enables the computer to execute the corresponding process implemented by the mobile terminal/terminal device in each of the methods in the embodiments of the present disclosure, which are not repeated herein for the sake of brevity.

It may be appreciated by those skilled in the art that the various example units and algorithm operations described in conjunction with the embodiments disclosed herein may be implemented in electronic hardware or a combination of computer software and electronic hardware. Whether such functions are performed in hardware or software depends on specific applications and design constraints of the technical solution. Those skilled may use different methods for specific applications to implement the described functions, but such implementation should not be considered beyond the scope of the present disclosure.

It may be clearly appreciated by those skilled in the art that, for convenience and conciseness of description, regarding the specific operating processes of the systems, apparatuses and units described above, reference may be made to the corresponding processes in the aforementioned method embodiments, which are not repeated herein.

In the several embodiments provided in the present disclosure, it should be understood that the disclosed systems, apparatuses and methods may be implemented by other ways. For example, the apparatus embodiments described above are only illustrative. For example, the division of the units is only a logical functional division, and in practice, there may be other divisions. For example, multiple units or components may be combined or integrated into another system, or some features may be ignored or not performed. In addition, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs, to achieve the purposes of the solutions in the embodiments.

Furthermore, the functional units in the various embodiments of the present disclosure may be integrated in one processing unit, or the units may exist physically individually, or two or more units may be integrated in one unit.

The functions may be stored in a computer-readable storage medium if the functions are implemented in form of software functional units and sold or used as stand-alone products. Based on such understanding, the essence of the technical solutions of the present disclosure, or the part that contributes to the related art, or part of the technical solutions may be embodied in the form of a software product, and such computer software product is stored in a storage medium, and includes several instructions used to enable a computer device (which may be a personal computer, a server, or a network device, etc.) to implement all or part of the operations of the methods described in the various embodiments of the present disclosure. The aforementioned storage medium includes a Universal Serial Bus (USB) flash drive, a removable hard disk, a Read-Only Memory (ROM), a Random Access Memory (RAM), a magnetic disk, an optical disk, or any other medium that may store program codes.

The descriptions above are merely specific embodiments of the present disclosure, but the scope of protection of the present disclosure is not limited thereto. Any change or replacement readily contemplated by those skilled in the art within the technical scope disclosed in the present disclosure shall fall within the scope of protection of the present disclosure. Accordingly, the scope of protection of the present disclosure shall be subject to the scope of protection of the claims.

**Claims**

1. A method for wireless communication, comprising:
   transmitting, by a network device, first information to a terminal device, wherein the first information is used to indicate whether the network device supports to receive or transmit a first transmission based on a first transmission manner before the terminal device is configured with a dedicated parameter, and the first transmission manner is used for coverage enhancement.

2. The method of claim 1, wherein the first transmission manner comprises at least one of the following:

   transmission of physical downlink shared channel (PDSCH) repetition;
   transport block size (TBS) scaling for PDSCH; or
   transmission of physical uplink shared channel (PUSCH) repetition.

3. The method of claim 1 or 2, wherein the first transmission comprises at least one of the following:

   a transmission during a random access procedure; or
   a transmission after the random access procedure and before the terminal device is configured with the dedicated parameter.

4. The method of any one of claims 1 to 3, wherein the first information is carried by one of the following:

   system information; or
   a random access response (RAR) message.

5. The method of any one of claims 1 to 4, wherein the first information comprises a first parameter, and the first parameter is used to indicate whether the network device supports to receive or transmit the first transmission based on the first transmission manner before the terminal device is configured with the dedicated parameter.

6. The method of any one of claims 1 to 5, wherein the first information comprises a second parameter, and the second parameter is a parameter for the first transmission manner.

7. The method of claim 6, wherein
when the first transmission manner comprises transmission of physical downlink shared channel (PDSCH) repetition, the second parameter comprises at least one of the following: a random access resource associated with the transmission of PDSCH repetition, a reference signal received power (RSRP) threshold corresponding to the transmission of PDSCH repetition, a repetition number of PDSCH transmission, or a set of repetition numbers of PDSCH transmission.

8. The method of claim 6, wherein
when the first transmission manner comprises transport block size (TBS) scaling for physical downlink shared channel (PDSCH), the second parameter comprises at least one of the following: a random access resource associated with the TBS scaling for PDSCH, a reference signal received power (RSRP) threshold corresponding to the TBS scaling for PDSCH, a TBS scaling factor for PDSCH, or a set of TBS scaling factors for PDSCH.

9. The method of claim 6, wherein
when the first transmission manner comprises transmission of physical uplink shared channel (PUSCH) repetition, the second parameter comprises at least one of the following: a random access resource associated with the transmission of PUSCH repetition, a reference signal received power (RSRP) threshold corresponding to the transmission of PUSCH repetition, a repetition number of PUSCH transmission, or a set of repetition numbers of PUSCH transmission.

10. The method of any one of claims 1 to 9, further comprising:
receiving, by the network device, second information from the terminal device, wherein the second information is used for at least one of the following:

   requesting to receive or transmit the first transmission based on the first transmission manner;
   indicating a capability to receive or transmit the first transmission based on the first transmission manner; or
   requesting a transmission factor, the transmission factor comprising a repetition number of transmission and/or a scaling factor.

11. The method of claim 10, wherein the second information is carried by one of the following:

   a message 1 (Msg1); or
   a message 3 (Msg3).

12. The method of claim 11, wherein the second information is comprised in one of the following in the Msg3:

   a media access control (MAC) control element (CE);
   radio resource control (RRC) signaling;
   a logical channel identification (LCID) corresponding to a common control channel (CCCH); or
   a reserved bit in a MAC sub-header.

13. The method of any one of claims 1 to 12, further comprising:
transmitting, by the network device, third information to the terminal device, wherein the third information is used to determine a target transmission factor, and the target transmission factor is a transmission factor applied in the first transmission manner.

14. The method of claim 13, wherein the target transmission factor is one of the following:

   a first transmission factor, the first transmission factor being a transmission factor in a first transmission factor set;
   a second transmission factor, the second transmission factor being a default transmission factor; or
   a third transmission factor, the third transmission factor being a transmission factor carried in the first information or second information.

15. The method of claim 14, wherein the first transmission factor set is one of the following:

   a transmission factor set carried in the first information; or
   a default transmission factor set.

16. The method of claim 14 or 15, wherein when the third information is used to indicate the first transmission factor, the target transmission factor is the first transmission factor.

17. The method of claim 14 or 15, wherein when the third information is used to indicate a value outside the first transmission factor set, the target transmission factor is the second transmission factor, or the first transmission manner is not used for the first transmission.

18. The method of any one of claims 14 to 16, wherein the terminal device does not expect the third information to indicate a value outside the first transmission factor set.

19. The method of claim 14, wherein the third information is used to indicate whether the second transmission factor or the third transmission factor is applied in the first transmission manner.

20. The method of claim 19, wherein when the third information is used to indicate that the second transmission factor or the third transmission factor is applied in the first transmission manner, the target transmission factor is the second transmission factor or the third transmission factor.

21. The method of claim 19, wherein when the third information is used to indicate that the second transmission factor or the third transmission factor is not applied in the first transmission manner, the first transmission manner is not used for the first transmission.

22. The method of any one of claims 13 to 21, wherein the third information is carried by one of the following:

    downlink control information (DCI); or
    a random access response (RAR) message.

23. The method of any one of claims 10 to 22, wherein

    when the first transmission manner comprises transmission of physical downlink shared channel (PDSCH) repetition, the transmission factor comprises a repetition number of PDSCH transmission;
    when the first transmission manner comprises transport block size (TBS) scaling for PDSCH, the transmission factor comprises a TBS scaling factor; and
    when the first transmission manner comprises transmission of physical uplink shared channel (PUSCH) repetition, the transmission factor comprises a repetition number of PUSCH transmission.

24. A method for wireless communication, comprising:
    receiving, by a terminal device, first information from a network device, wherein the first information is used to indicate whether the network device supports to receive or transmit a first transmission based on a first transmission manner before the terminal device is configured with a dedicated parameter, and the first transmission manner is used for coverage enhancement.

25. The method of claim 24, wherein the first transmission manner comprises at least one of the following:

    transmission of physical downlink shared channel (PDSCH) repetition;
    transport block size (TBS) scaling for PDSCH; or
    transmission of physical uplink shared channel (PUSCH) repetition.

26. The method of claim 24 or 25, wherein the first transmission comprises at least one of the following:

    a transmission during a random access procedure; or
    a transmission after the random access procedure and before the terminal device is configured with the dedicated parameter.

27. The method of any one of claims 24 to 26, wherein the first information is carried by one of the following:

    system information; or
    a random access response (RAR) message.

28. The method of any one of claims 24 to 27, wherein the first information comprises a first parameter, and the first parameter is used to indicate whether the network device supports to receive or transmit the first transmission based on the first transmission manner before the terminal device is configured with the dedicated parameter.

29. The method of any one of claims 24 to 28, wherein the first information comprises a second parameter, and the second parameter is a parameter for the first transmission manner.

30. The method of claim 29, wherein
when the first transmission manner comprises transmission of physical downlink shared channel (PDSCH) repetition, the second parameter comprises at least one of the following: a random access resource associated with the transmission of PDSCH repetition, a reference signal received power (RSRP) threshold corresponding to the transmission of PDSCH repetition, a repetition number of PDSCH transmission, or a set of repetition numbers of PDSCH transmission.

31. The method of claim 29, wherein
when the first transmission manner comprises transport block size (TBS) scaling for physical downlink shared channel (PDSCH), the second parameter comprises at least one of the following: a random access resource associated with the TBS scaling for PDSCH, a reference signal received power (RSRP) threshold corresponding to the TBS scaling for PDSCH, a TBS scaling factor for PDSCH, or a set of TBS scaling factors for PDSCH.

32. The method of claim 29, wherein
when the first transmission manner comprises transmission of physical uplink shared channel (PUSCH) repetition, the second parameter comprises at least one of the following: a random access resource associated with the transmission of PUSCH repetition, a reference signal received power (RSRP) threshold corresponding to the transmission of PUSCH repetition, a repetition number of PUSCH transmission, or a set of repetition numbers of PUSCH transmission.

33. The method of any one of claims 24 to 32, further comprising:
transmitting, by the terminal device, second information to the network device, wherein the second information is used for at least one of the following:

requesting to receive or transmit the first transmission based on the first transmission manner;
indicating a capability to receive or transmit the first transmission based on the first transmission manner; or
requesting a transmission factor, the transmission factor comprising a repetition number of transmission and/or a scaling factor.

34. The method of claim 33, wherein the second information is carried by one of the following:

a message 1 (Msg1); or
a message 3 (Msg3).

35. The method of claim 34, wherein the second information is comprised in one of the following in the Msg3:

a media access control (MAC) control element (CE);
radio resource control (RRC) signaling;
a logical channel identification (LCID) corresponding to a common control channel (CCCH); or
a reserved bit in a MAC sub-header.

36. The method of any one of claims 24 to 35, further comprising:
receiving, by the terminal device, third information from the network device, wherein the third information is used to determine a target transmission factor, and the target transmission factor is a transmission factor applied in the first transmission manner.

37. The method of claim 36, wherein the target transmission factor is one of the following:

a first transmission factor, the first transmission factor being a transmission factor in a first transmission factor set;
a second transmission factor, the second transmission factor being a default transmission factor; or
a third transmission factor, the third transmission factor being a transmission factor carried in the first information or second information.

38. The method of claim 37, wherein the first transmission factor set is one of the following:

    a transmission factor set carried in the first information; or
    a default transmission factor set.

39. The method of claim 37 or 38, wherein when the third information indicates the first transmission factor, the target transmission factor is the first transmission factor.

40. The method of claim 37 or 38, wherein when the third information indicates a value outside the first transmission factor set, the target transmission factor is the second transmission factor, or the first transmission manner is not used for the first transmission.

41. The method of any one of claims 37 to 39, wherein the terminal device does not expect the third information to indicate a value outside the first transmission factor set.

42. The method of claim 37, wherein the third information indicates whether the second transmission factor or the third transmission factor is applied in the first transmission manner.

43. The method of claim 42, wherein when the third information indicates that the second transmission factor or the third transmission factor is applied in the first transmission manner, the target transmission factor is the second transmission factor or the third transmission factor.

44. The method of claim 42, wherein when the third information indicates that the second transmission factor or the third transmission factor is not applied in the first transmission manner, the first transmission manner is not used for the first transmission.

45. The method of any one of claims 37 to 45, wherein the third information is carried by one of the following:

    downlink control information (DCI); or
    a random access response (RAR) message.

46. The method of any one of claims 33 to 45, wherein

    when the first transmission manner comprises transmission of physical downlink shared channel (PDSCH) repetition, the transmission factor comprises a repetition number of PDSCH transmission;
    when the first transmission manner comprises transport block size (TBS) scaling for PDSCH, the transmission factor comprises a TBS scaling factor; and
    when the first transmission manner comprises transmission of physical uplink shared channel (PUSCH) repetition, the transmission factor comprises a repetition number of PUSCH transmission.

47. An apparatus for wireless communication, applied to a network device, comprising:
a transmission unit, configured to transmit, through the network device, first information to a terminal device, wherein the first information is used to indicate whether the network device supports to receive or transmit a first transmission based on a first transmission manner before the terminal device is configured with a dedicated parameter, and the first transmission manner is used for coverage enhancement.

48. An apparatus for wireless communication, applied to a terminal device, comprising:
a receiving unit, configured to receive, through the terminal device, first information from a network device, wherein the first information is used to indicate whether the network device supports to receive or transmit a first transmission based on a first transmission manner before the terminal device is configured with a dedicated parameter, and the first transmission manner is used for coverage enhancement.

49. A communication device, comprising a processor and a memory configured to store a computer program, and the processor being configured to call and run the computer program stored in the memory, to perform the method of any one of claims 1 to 23, or to perform the method of any one of claims 24 to 46.

**50.** A chip, comprising a processor configured to call and run a computer program from a memory, enabling a device installed with the chip to perform the method of any one of claims 1 to 23, or to perform the method of any one of claims 24 to 46.

**51.** A computer-readable storage medium, configured to store a computer program that enables a computer to perform the method of any one of claims 1 to 23, or to perform the method of any one of claims 24 to 46.

**52.** A computer program product, comprising a computer program instruction that enables a computer to perform the method of any one of claims 1 to 23, or to perform the method of any one of claims 24 to 46.

**53.** A computer program, wherein the computer program enables a computer to perform the method of any one of claims 1 to 23, or to perform the method of any one of claims 24 to 46.

**FIG. 1**

**FIG. 2**

1202

1201

1203

**FIG. 3**

Satellite

Feeder link

Service
link

Gateway

Data
network

**FIG. 4**

**FIG. 5**

A network device transmits first information to a terminal device, where the first information is used to indicate whether the network device supports to receive or transmit a first transmission based on a first transmission manner before the terminal device is configured with a dedicated parameter, and the first transmission manner is used for coverage enhancement

S601

**FIG. 6**

A terminal device receives first information from a network device, where the first information is used to indicate whether the network device supports to receive or transmit a first transmission based on a first transmission manner before the terminal device is configured with a dedicated parameter, and the first transmission manner is used for coverage enhancement

S701

**FIG. 7**

A network device transmits first information to a terminal device, where the first information is used to indicate whether the network device supports to receive or transmit a first transmission based on a first transmission manner before the terminal device is configured with a dedicated parameter, and the first transmission manner is used for coverage enhancement

S601

The network device receives second information from the terminal device, where the second information is used for at least one of the following: requesting to receive or transmit the first transmission based on the first transmission manner; indicating a capability to receive or transmit the first transmission based on the first transmission manner; or requesting a transmission factor, the transmission factor including a repetition number of transmission and/or a scaling factor

S602

## FIG. 8

A terminal device receives first information from a network device, where the first information is used to indicate whether the network device supports to receive or transmit a first transmission based on a first transmission manner before the terminal device is configured with a dedicated parameter, and the first transmission manner is used for coverage enhancement

S701

The terminal device transmits second information to the network device, where the second information is used for at least one of the following: requesting to receive or transmit the first transmission based on the first transmission manner; indicating a capability to receive or transmit the first transmission based on the first transmission manner; or requesting a transmission factor, the transmission factor including a repetition number of transmission and/or a scaling factor

S702

## FIG. 9

A network device transmits first information to a terminal device, where the first information is used to indicate whether the network device supports to receive or transmit a first transmission based on a first transmission manner before the terminal device is configured with a dedicated parameter, and the first transmission manner is used for coverage enhancement

S601

The network device transmits third information to the terminal device, where the third information is used to determine a target transmission factor, and the target transmission factor is a transmission factor applied in the first transmission manner

S603

**FIG. 10**

A terminal device receives first information from the terminal device, where the first information is used to indicate whether the network device supports to receive or transmit a first transmission based on a first transmission manner before the terminal device is configured with a dedicated parameter, and the first transmission manner is used for coverage enhancement

S701

The terminal device receives third information from the network device, where the third information is used to determine a target transmission factor, and the target transmission factor is a transmission factor applied in the first transmission manner

S703

**FIG. 11**

| Network device | | Terminal device |
|---|---|---|

First information, used for at least one of the following: indicating that the network device supports to receive a PDSCH based on transmission of PDSCH repetition before the terminal device is configured with a dedicated parameter, or a parameter for the transmission of PDSCH repetition

Second information, used for at least one of the following: requesting to receive the PDSCH based on the transmission of PDSCH repetition; indicating a capability to receive the PDSCH based on the transmission of PDSCH repetition; or requesting a repetition number of PDSCH transmission

Third information, used to determine a target repetition number of PDSCH transmission

## FIG. 12

| Contention-based preamble | Preamble for repetition transmission of PDSCH | Contention-free preamble |
|---|---|---|

Random access occasion

## FIG. 13

| Network device | | Terminal device |
|---|---|---|
| | First information, used for at least one of the following: indicating that the network device supports to receive a PUSCH based on transmission of PUSCH repetition before the terminal device is configured with a dedicated parameter, or a parameter for the transmission of PUSCH repetition ▶ | |
| | Second information, used for at least one of the following: requesting to receive the PUSCH based on the transmission of PUSCH repetition; indicating a capability to receive the PUSCH based on the transmission of PUSCH repetition; or requesting a repetition number of PUSCH transmission ◀ | |
| | Third information, used to determine a target repetition number of PUSCH transmission ▶ | |

**FIG. 14**

| Network device | | Terminal device |
|---|---|---|
| | First information, used for at least one of the following: indicating that the network device supports to transmit a PDSCH based on TBS scaling for PDSCH before the terminal device is configured with a dedicated parameter, or a parameter for the TBS scaling for PDSCH ▶ | |
| | Second information, used for at least one of the following: requesting to receive the PDSCH based on the TBS scaling for PDSCH; indicating a capability to receive the PDSCH based on the TBS scaling for PDSCH; or requesting a TBS scaling factor for PDSCH ◀ | |
| | Third information, used to determine a target TBS scaling factor for PDSCH ▶ | |

**FIG. 15**

| Contention-based preamble | Preamble for repetition transmission of PDSCH | | Contention-free preamble |
|---|---|---|---|
| | | Preamble for TBS scaling for PDSCH | |

Random access occasion

**FIG. 16**

Apparatus for wireless
communication 1700

First transmission unit 1701

**FIG. 17**

Apparatus for wireless
communication 1800

Second receiving unit 1801

**FIG. 18**

**FIG. 19**

**FIG. 20**

**FIG. 21**

## INTERNATIONAL SEARCH REPORT

| International application No. |
|---|
| **PCT/CN2023/104183** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC: H04W,H04Q

Documentation searched other than minimum documentation to the extent that such documents are included in the fields searched

Electronic data base consulted during the international search (name of data base and, where practicable, search terms used)

CNTXT, ENTXTC, VEN, 3GPP: 支持, 能力, 覆盖增强, 重复传输, 下行共享信道, 上行共享信道, 缩放, 传输块大小, 尺寸, 随机接入, 专属, 专用, 网络设备, 终端, support, CE, coverage enhancement, repetition, repeat, PDSCH, PUSCH, scale, TBS, TB, size, RA, random access, network, BS, NB, TRP, UE

### C. DOCUMENTS CONSIDERED TO BE RELEVANT

| Category* | Citation of document, with indication, where appropriate, of the relevant passages | Relevant to claim No. |
|---|---|---|
| X | CN 115119329 A (VIVO COMMUNICATION TECHNOLOGY CO., LTD.) 27 September 2022 (2022-09-27) <br> description, paragraphs [0005]-[0057], [0120]-[0126], and [0151]-[0158] | 1-53 |
| X | CN 116318564 A (CHINA TELECOM CORP., LTD.) 23 June 2023 (2023-06-23) <br> description, paragraphs [0002]-[0042] | 1, 3-6, 13-22, 24, 26, 36-45, 47-53 |
| A | US 2016353342 A1 (NEC CORPORATION) 01 December 2016 (2016-12-01) <br> entire document | 1-53 |
| A | CCU et al. "Discussion on Coverage Enhancements for NR NTN" <br> *3GPP TSG RAN WG1 #113, R1-2304678*, 26 May 2023 (2023-05-26), <br> entire document | 1-53 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2023** | **13 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104183**

| Patent document cited in search report | | | Publication date (day/month/year) | Patent family member(s) | | | Publication date (day/month/year) |
|---|---|---|---|---|---|---|---|
| CN | 115119329 | A | 27 September 2022 | None | | | |
| CN | 116318564 | A | 23 June 2023 | None | | | |
| US | 2016353342 | A1 | 01 December 2016 | US | 2020351741 | A1 | 05 November 2020 |
| | | | | EP | 3609212 | A1 | 12 February 2020 |
| | | | | JP | 2019118150 | A | 18 July 2019 |
| | | | | US | 2022030490 | A1 | 27 January 2022 |
| | | | | JP | 2018201258 | A | 20 December 2018 |
| | | | | EP | 3101937 | A1 | 07 December 2016 |
| | | | | JPWO | 2015114693 | A1 | 23 March 2017 |
| | | | | JP | 2022010012 | A | 14 January 2022 |
| | | | | WO | 2015114693 | A1 | 06 August 2015 |
| | | | | EP | 3370451 | A1 | 05 September 2018 |
| | | | | US | 2023224784 | A1 | 13 July 2023 |
| | | | | JP | 2020074637 | A | 14 May 2020 |
| | | | | US | 2017238217 | A1 | 17 August 2017 |
| | | | | US | 2018007597 | A1 | 04 January 2018 |

Form PCT/ISA/210 (patent family annex) (July 2022)